# EUROPEAN PATENT SPECIFICATION

(11) **EP 2 827 586 B1**
(45) Date of publication and mention of the grant of the patent: **08.05.2019**
(21) Application number: 13760260.3
(22) Date of filing: 05.03.2013
(51) Int. Cl.: H04N 21/43, H04N 21/462, H04N 21/4722, H04N 21/488

(54) **RECEIVER APPARATUS, BROADCAST/COMMUNICATION-COOPERATION SYSTEM, AND BROADCAST/COMMUNICATION-COOPERATION METHOD**
EMPFÄNGERVORRICHTUNG, RUNDFUNK-/KOMMUNIKATIONS-KOOPERATIONSSYSTEM UND RUNDFUNK-/KOMMUNIKATIONS-KOOPERATIONSVERFAHREN
APPAREIL RÉCEPTEUR, SYSTÈME DE COOPÉRATION DE RADIODIFFUSION/COMMUNICATION, ET PROCÉDÉ DE COOPÉRATION DE RADIODIFFUSION/COMMUNICATION

(30) Priority: 14.03.2012 US 201261610621 P
(43) Date of publication of application: 21.01.2015
(73) Proprietor: Panasonic Corporation, Kadoma-shi, Osaka 571-8501 (JP)
(72) Inventor: OZAWA, Yuka, Osaka 540-6207 (JP); HIRAMOTO, Takuji, Osaka 540-6207 (JP); SASAKI, Taiji, Osaka 540-6207 (JP); UJIIE, Yoshihiro, Osaka 540-6207 (JP); MUNETSUGU, Toshihiko, Osaka 540-6207 (JP); NISHII, Yoshimi, Osaka 540-6207 (JP); OGAWA, Tomoki, Osaka 540-6207 (JP)
(74) Representative: Grünecker Patent- und Rechtsanwälte PartG mbB
(86) International application number: PCT/JP2013/001340
(87) International publication number: WO 2013/136715

(56) References cited:
- WO-A2-2007/095309
- JP-A- 2002 142 208
- JP-A- 2012 015 958
- US-A1- 2006 170 819
- US-A1- 2008 085 099
- US-A1- 2010 188 572
- US-A1- 2011 149 153
- US-A1- 2011 310 224
- US-A1- 2012 036 538

## Description

### [Technical Field]

The present invention relates to reception apparatuses that receive digital broadcasting and, in particular, to technology for displaying broadcast content received by digital broadcasting and communication content received via a network in conjunction with each other.

### [Background Art]

In the current digital broadcasting, besides video and audio for broadcast programs, text and still picture for news, weather forecasts, and the like are provided by datacasting. However, the amount of data that can be transmitted by broadcasting is limited, and this makes it difficult to provide optimized services for individual viewers only by broadcasting.

To address this problem, a broadcast-communication collaboration system that distributes, via a network, application programs for providing various services in conjunction with broadcast programs has been devised. For example, a service to distribute, via a network, subtitles in languages not provided by digital broadcasting has been considered. In this case, reception apparatuses are required to output video for a broadcast program and subtitles received via the network in synchronization with each other.

Patent Literature 1 discloses technology for outputting a video stream recorded on a DVD and an external stream, such as an audio stream and a subtitle stream, received from another medium, for example, via a network, in synchronization with each other. Specifically, in the technology disclosed in Patent Literature 1, presentation time stamps (PTSs) are appended to video streams and external streams, and a receiver plays back a video stream and an external stream with the same PTS in synchronization with each other.

US 2008/085099 A1 relates to playing a media source and replacing the broadcast subtitle stream with a substitute subtitle stream, received from another medium. Synchronization of the substitute subtitle stream with the broadcast subtitle stream can be done using timestamps included in both subtitle streams. As an alternative, the synchronization can be done using an intermediate subtitle stream linked with the broadcast subtitle stream by string comparison and with the substitute subtitle stream by timestamps.

### [Citation List]

### [Patent Literature]

[Patent Literature 1]
Japanese Patent Application Publication No. 2002-247526

### [Non-Patent Literature]

[Non-Patent Literature 1]
ARIB STD-B24

### [Summary of Invention]

### [Technical Problem]

Application of the technology disclosed in Patent Literature 1 using PTSs in order to output video for broadcast programs and subtitles received via a network in synchronization with each other puts an additional processing load on reception apparatuses for the following reason.

Even when a server for distributing subtitle streams transmits a subtitle stream in accordance with a broadcast time of a video stream, a transmission delay time in digital broadcasting and a transmission delay time in the network are not equal to each other. Therefore, reception apparatuses are required to store one of the video stream and the subtitle stream arriving earlier in a buffer, and to perform synchronization processing upon arrival of the other one of the video stream and the subtitle stream with a corresponding PTS.

The present invention has been conceived in view of the above-mentioned problem, and aims to provide a reception apparatus, a broadcast-communication collaboration system, and a broadcast-communication collaboration method that allow for outputting video for digital broadcast programs and subtitles obtained separately from the video in synchronization with each other without putting a heavy load on the reception apparatus.

### [Solution to Problem]

In order to achieve the above-stated aim, a reception apparatus as one aspect of the present invention is a reception apparatus according to claim 1.

### [Advantageous Effects of Invention]

According to the structure described above, the alternative subtitles are output by using the timing information used to output the broadcast subtitles, the images constituting the video stream and the character strings constituting the alternative subtitles are output in synchronization with each other without putting a heavy load on the reception apparatus.

### [Brief Description of Drawings]

FIG. 1 is a block diagram of a broadcast-communication collaboration system 1 according to Embodiment 1.
FIG. 2 shows a data structure (data group structure) of broadcast subtitles.
FIG. 3 shows a data structure of caption management data.
FIG. 4 shows a data structure of caption statement data.
FIG. 5 shows a data structure of a data unit.
FIG. 6 is a diagram for explaining data unit parameters.
FIG. 7 is a diagram for explaining one specific example of the broadcast subtitles.
FIG. 8 shows one example of a subtitle database managed by a subtitle server 30.
FIG. 9 is a functional block diagram of a digital television 10.
FIG. 10 shows one example of alternative subtitle data stored in an alternative subtitle holding unit.
FIG. 11 shows a hardware configuration of a reception apparatus 11.
FIG. 12 is a flow chart showing alternative subtitle synchronization processing performed by the reception apparatus 11.
FIG. 13 is a flow chart showing timing control processing performed by the reception apparatus 11.
FIG. 14 is a flow chart showing screen generation processing performed by the reception apparatus 11.
FIGs. 15A and 15B are diagrams for explaining effects of Embodiment 1.
FIG. 16 is a block diagram of a broadcast-communication collaboration system 2 according to Embodiment 2.
FIG. 17 is a functional block diagram of a digital television 100.
FIGs. 18A and 18B are diagrams for explaining a collaboration screen.
FIG. 19 is a flow chart showing alternative subtitle synchronization processing performed by a reception apparatus 1100.
FIG. 20 is a flow chart showing timing control processing performed by the reception apparatus 1100.
FIG. 21 is a flow chart showing screen generation processing performed by the reception apparatus 1100.
FIG. 22 shows an example of description of an HTML file as communication content.
FIG. 23 shows a modification of the subtitle database.
FIG. 24 shows another modification of the subtitle database.

### [Description of Embodiments]

### <1. Overview>

The reception apparatus as one aspect of the present invention acquires subtitles in languages not provided by digital broadcasting from a server, for example, via a network, and outputs the subtitles as acquired in synchronization with video for digital broadcast programs.

In the current digital broadcasting in Japan, broadcasting stations transmit Japanese subtitles for deaf and hard-of-hearing viewers. Hereinafter, the subtitles transmitted from the broadcasting stations are referred to as "broadcast subtitles". To the broadcast subtitles, timing information for displaying the broadcast subtitles in synchronization with corresponding video is appended.

Subtitles in other languages acquired from a server via a network (hereinafter, referred to as "alternative subtitles") are translations of the broadcast subtitles. Thus, a timing at which alternative subtitles are to be displayed is the same as a timing at which broadcast subtitles corresponding to the alternative subtitles are to be displayed. The inventors focused on the fact, and devised a reception apparatus that performs alternative subtitle synchronization processing of determining a timing at which the alternative subtitles are displayed by using the timing information appended to the broadcast subtitles, and outputting the alternative subtitles and video in synchronization with each other.

The following describes specific embodiments with reference to the drawings.

### <2. Embodiment 1>

In the present embodiment, description is made on a broadcast-communication collaboration system 1 as one aspect of the broadcast-communication collaboration system according to the present invention.

### <2-1. Structure of Broadcast-communication Collaboration System 1>

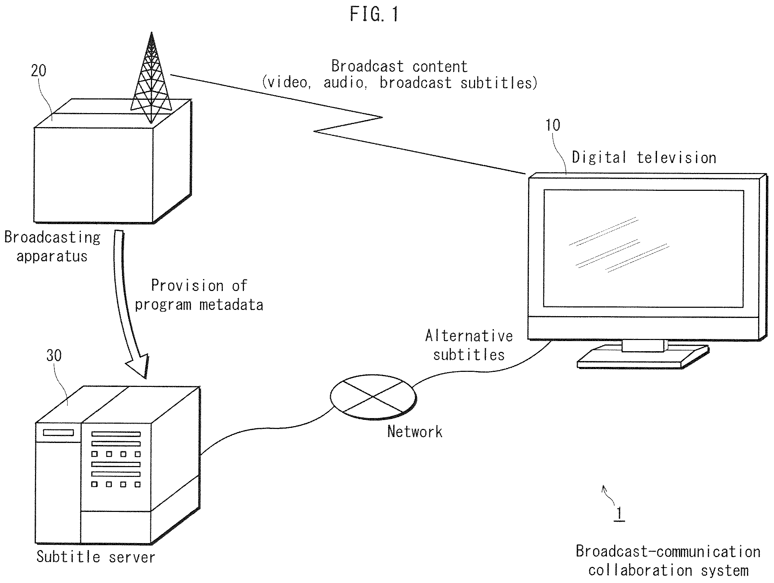

FIG. 1 shows the structure of the broadcast-communication collaboration system 1. As shown in FIG. 1, the broadcast-communication collaboration system 1 includes a digital television 10, a broadcasting apparatus 20, and a subtitle server 30.

The broadcasting apparatus 20 is owned by a broadcasting station, and transmits MPEG-2 transport streams into which a plurality of programs and datacasting have been multiplexed. Each of the programs (broadcast content) includes video, audio, and broadcast subtitles. The "broadcast subtitles" herein refer to a set of subtitle statements for use in a service to display subtitles relating to video by superimposing the subtitles on the video from the start to the end of a program. Each subtitle statement is a character string composed of one or more characters. To each character string, a synchronization identifier for associating the character string with an alternative character string (described later) is provided.

The subtitle server 30 is an apparatus owned by a service provider. The service provider receives program metadata from a broadcasting station in advance of an estimated broadcast time of a program. The service provider may receive the program metadata from the broadcasting station as needed in accordance with the progress of the program. The program metadata means a variety of information on the program. In the present embodiment, the service provider receives, as the program metadata, at least character strings constituting the broadcast subtitles and synchronization identifiers provided to the respective character strings. The service provider creates alternative subtitles. The alternative subtitles are a set of alternative character strings that are translations of character strings constituting the broadcast subtitles in another language. In the present embodiment, the service provider creates the alternative subtitles in a plurality of languages.

The subtitle server 30 manages the created alternative subtitles in the plurality of languages by using a subtitle database described later. Upon receiving a request for alternative subtitles with designation of a program and a language from the digital television 10 after the start of broadcasting of the program, the subtitle server 30 transmits the alternative subtitles for the requested program in the requested language to the digital television 10.

The digital television 10 is installed in a user's home, and receives the MPEG-2 transport streams transmitted from the broadcasting apparatus 20 owned by the broadcasting station. The digital television 10 can be connected to the subtitle server 30 via a network such as the Internet, and receives the alternative subtitles from the subtitle server 30. The digital television 10 outputs video and audio received from the broadcasting apparatus 20 and the alternative subtitles received from the subtitle server 30 in synchronization with each other.

### <2-2. Data>

Data for use in the broadcast-communication collaboration system 1 is described below.

### (Data Structure of Broadcast Subtitles)

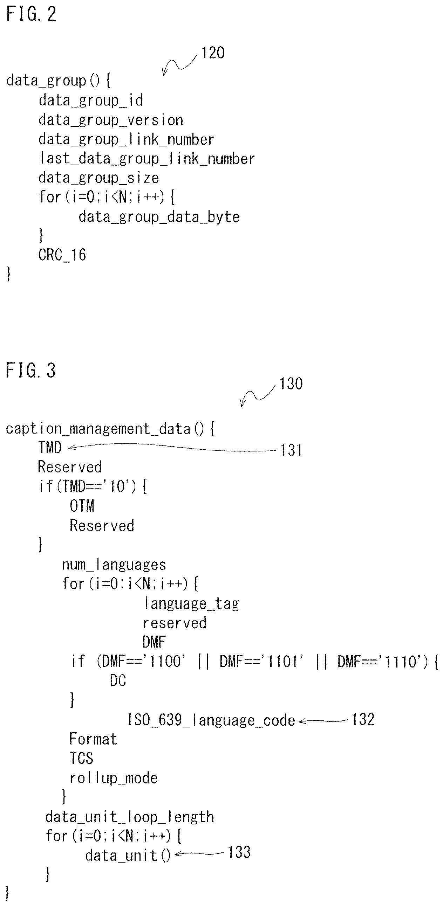

The data structure of the broadcast subtitles are described first with use of FIGs. 2-7.

In the present embodiment, a coding scheme specified in Association of Radio Industries and Businesses (ARIB) STD-B24 is partially extended to achieve synchronization between video and alternative subtitles in the digital television 10.

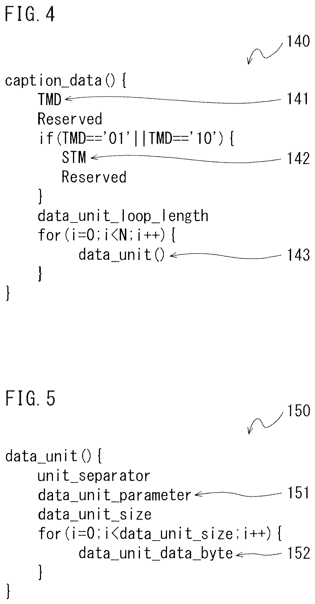

The broadcast subtitles are data-grouped by the structure shown in FIG. 2 and transmitted as a payload of an independent packetized elementary stream (PES). Meanings, the number of bits, and values of each field of a data group 120 are as specified in ARIB STD-B24. In a data_group_data_byte field, data group data to be transmitted is stored. The data group data is specifically caption management data 130 shown in FIG. 3 or caption statement data 140 shown in FIG. 4.

FIG. 3 shows the data structure of the caption management data 130. The caption management data 130 is composed of a caption management data header indicating language identification and a transmission mode for the broadcast subtitles, and a data unit group. Meanings, the number of bits, and values of each field of the caption management data 130 are as specified in ARIB STD-B24.

For example, a TMD (131) field indicates a time display mode. In an ISO_639_language_code (132) field, a language code for identifying a language of the broadcast subtitles is stored. In a data_unit() (133) field, a data unit of data, such as setting data, valid to all the broadcast subtitles transmitted in the same elementary stream (ES) is placed.

FIG. 4 shows the data structure of the caption statement data 140. The caption statement data 140 is a body of the broadcast subtitles. The caption statement data 140 is composed of time information for displaying the broadcast subtitles in synchronization with video and audio, and one or more data unit groups. Meanings, the number of bits, and values of each field of the caption statement data 140 are as specified in ARIB STD-B24. For example, a TMD (141) field indicates a time display mode, as in the caption management data 130. An STM (142) field indicates a display start time of the following subtitle statement. In a data_unit() (143) field, a data unit of the subtitle statement is placed.

FIG. 5 shows the data structure of a data unit 150 for use in the caption management data 130 and the caption statement data 140. In a data_unit_parameter (151) field, a value for identifying a type of the data unit is stored. In a data_unit_data_byte (152) field, data unit data to be transmitted is stored. Meanings, the number of bits, and values of each of the other fields of the data unit 150 are as specified in ARIB STD-B24.

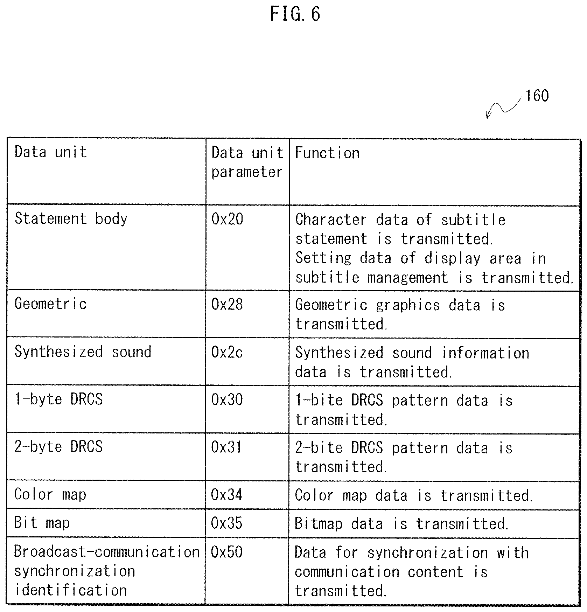

A table 160 shown in FIG. 6 indicates types of the data unit, values of the data_unit_parameter, and functions.

"Statement body", "geometric", etc. in the data unit column indicate names of the data unit. Values "0x20", "0x28", etc. in the data unit parameter column indicate values that are actually stored in the data_unit_parameter (151) field. For example, when the value "0x20" is stored in the data_unit_parameter (151) field in the data unit 150 shown in FIG. 5, character data of the subtitle statement is stored in the data_unit_data_byte (152) field.

In the table 160 shown in FIG. 6, the data units for "statement body", "geometric", "synthesized sound", "1-byte DRCS", "2-byte DRCS", "color map", and "bit map" are already specified in ARIB STD-B24.

In the present embodiment, a data unit having a name "broadcast-communication synchronization identification" and a value of the data unit parameter of "0x50" is newly defined by extending the ARIB standard. The data unit for "broadcast-communication synchronization identification" is a data unit for transmitting data for displaying video as the broadcast content and alternative subtitles as the communication content in synchronization with each other. When a value "0x50" is stored in the data_unit_parameter (151) field in the data unit 150 shown in FIG. 5, a synchronization identifier for identifying a subtitle statement (a character string) of the broadcast subtitles is stored in the data_unit_data_byte field as information for displaying the video and the alternative subtitles in synchronization with each other.

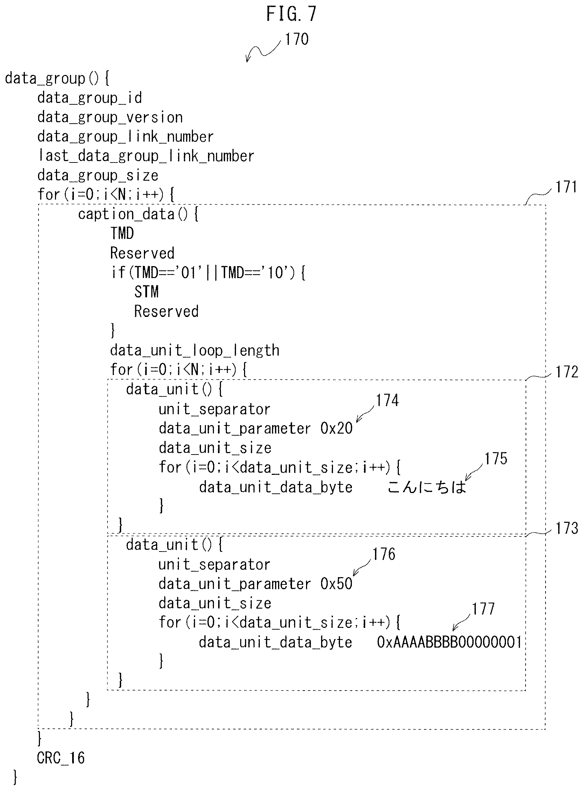

FIG. 7 shows one example of a data group for transmitting the broadcast subtitles. As shown in FIG. 7, caption statement data 171 is stored in the data_group_data_byte field in a data group 170. Two data units are stored in the caption statement data 171.

Since the value "0x20" is stored in a data_unit_parameter (174) field in a data unit 172 in the first loop, the data unit 172 is a data unit for a statement body. Subtitle statements of the broadcast subtitles are stored in the data_unit_data_byte (175) field in the data unit 172. Specifically, an eight-level code for displaying a text " 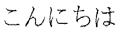 ("Hello" in Japanese)" is stored. The eight-level code herein includes a code of the text and a control code for display control.

Since the value "0x50" is stored in a data_unit_parameter (176) field in a data unit 173 in the second loop, the data unit 173 is a data unit for broadcast-communication synchronization identification. In a data_unit_data_byte (177) field in the data unit 173, a synchronization identifier for associating a subtitle statement " 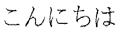 ("Hello" in Japanese)" with an alternative character string as a translation of the subtitle statement " 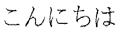 ("Hello" in Japanese)" in another language. Specifically, a code "0xAAAABBBB00000001" is stored.

In the present embodiment, for example, the first half (eight upper digits) "AAAABBBB" of the code "0xAAAABBBB00000001" is information for uniquely identifying a program, and the second half (eight lower digits) "00000001" of the code "0xAAAABBBB00000001" is information for uniquely identifying the subtitle statement " 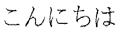 ("Hello" in Japanese)" in the program.

As described above, the broadcast subtitles transmitted from the broadcasting apparatus 20 have the structure in which the newly defined data unit for broadcast-communication synchronization identification is additionally stored in the caption statement data that stores the data unit for the statement body. A program in which the data unit for broadcast-communication synchronization identification is stored in the caption statement data or the caption management data is referred to as a "broadcast-communication collaboration program" in the present embodiment.

### (Extension of PMT and EIT)

In the present embodiment, for example, a program map table (PMT) and an event information table (EIT) in program identification information (PSI/SI) are extended to store and transmit a flag indicating that a program is the broadcast-communication collaboration program, program identification information for identifying the program, and a language code for identifying a language of the broadcast subtitles.

### (Subtitle Database)

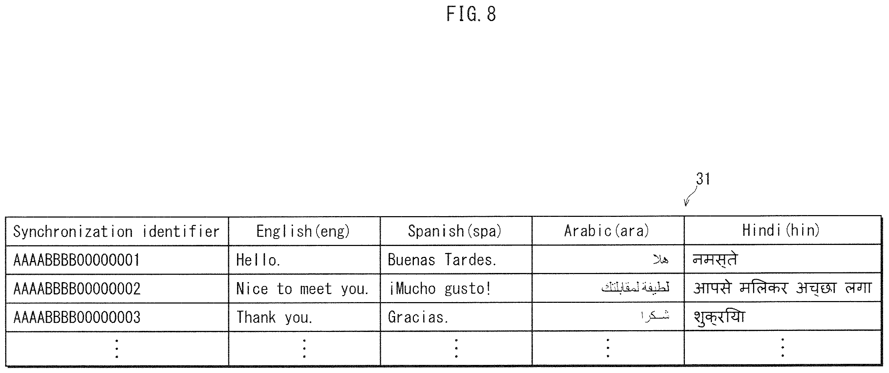

FIG. 8 shows a subtitle database 31 managed by the subtitle server 30. The subtitle server 30 manages alternative subtitles in a plurality of languages by using the subtitle database 31 shown in FIG. 8.

As shown in FIG. 8, in the subtitle database 31, alternative character strings as translations of each of subtitle statements (character strings) constituting the broadcast subtitles in English, Spanish, Arabic, and Hindi are stored in association with a synchronization identifier. The subtitle database 31 also includes information for identifying each language. In this case, three letters of the alphabet specified in ISO 639-2 are used, for example. English, Spanish, Arabic, and Hindi are expressed as three letters of the alphabet "eng", "spa", "ara", and "hin", respectively.

Upon receiving a request for alternative subtitles along with information for identifying a program and a language from the digital television 10 after the start of broadcasting of the program, the subtitle server 30 extracts, from the subtitle database 31, the alternative subtitles for the requested program in the requested language and a synchronization identifier as a set. The subtitle server 30 transmits, to the digital television 10, alternative subtitle data composed of the synchronization identifier and the alternative subtitles as extracted.

As described above, eight upper digits of the synchronization identifier are information for uniquely identifying the program in the present embodiment. The subtitle server 30 can thus extract the alternative subtitles requested from the subtitle database 31 upon acquiring information for identifying the program and the language from the digital television 10.

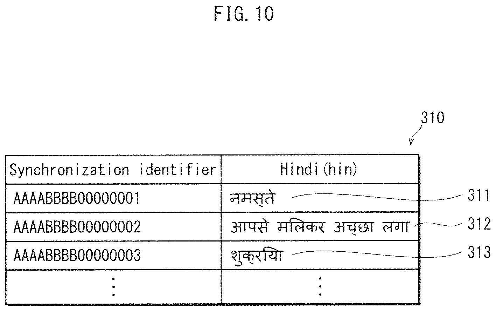

For example, upon receiving "AAAABBBB" as information for identifying the program and "hin" as information for identifying the language, the subtitle server 30 transmits alternative subtitle data 310 shown in FIG. 10 to the digital television 10.

### <2-3. Structure of Digital Television 10>

### (Functional Structure)

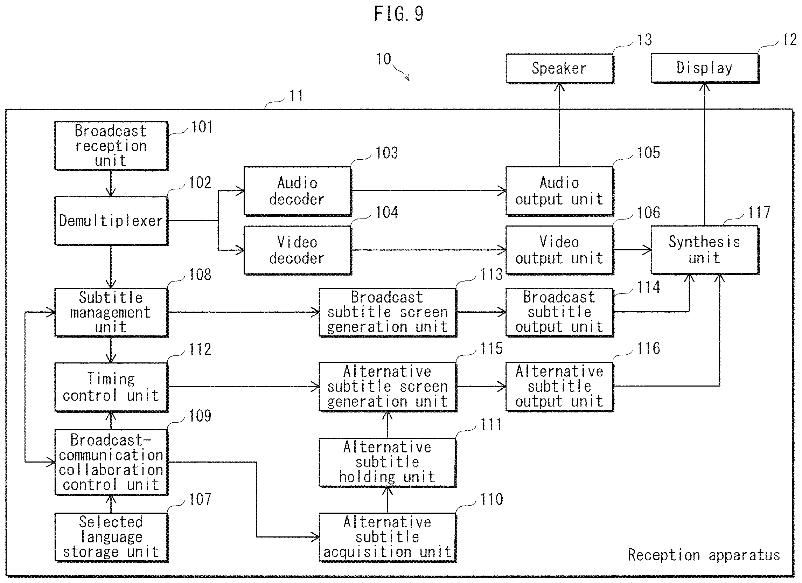

FIG. 9 is a block diagram showing a functional structure of the digital television 10. As shown in FIG. 9, the digital television 10 includes a reception apparatus 11, a display 12 for outputting video, and a speaker 13 for outputting audio.

The reception apparatus 11 includes a broadcast reception unit 101, a demultiplexer 102, an audio decoder 103, a video decoder 104, an audio output unit 105, a video output unit 106, a selected language storage unit 107, a subtitle management unit 108, a broadcast-communication collaboration control unit 109, an alternative subtitle acquisition unit 110, an alternative subtitle holding unit 111, a timing control unit 112, a broadcast subtitle screen generation unit 113, a broadcast subtitle output unit 114, an alternative subtitle screen generation unit 115, an alternative subtitle output unit 116, and a synthesis unit 117.

The broadcast reception unit 101 receives transport streams transmitted from the broadcasting apparatus 20 in the broadcasting station. The broadcast reception unit 101 passes the transport streams as received to the demultiplexer 102.

The demultiplexer 102 acquires, from the transport stream into which a plurality of programs have been multiplexed, only packets and a data carousel for a program selected by a user. Users can select a program to be viewed by operation of an input device such as a remote control (not illustrated).

The demultiplexer 102 passes audio packets to the audio decoder 103, and passes video packets to the video decoder 104. The demultiplexer 102 also passes EIT packets and subtitle packets to the subtitle management unit 108, and passes the data carousel to a datacasting decoder (not illustrated).

The audio decoder 103 acquires and decodes the audio packets. Audio signals resulting from decoding are input to the audio output unit 105.

The video decoder 104 acquires and decodes the video packets. Video signals resulting from decoding are input to the video output unit 106.

The audio output unit 105 acquires the audio signals. The audio output unit 105 outputs the audio signals as acquired to the speaker 13 in synchronization with a display screen output to the display 12.

The video output unit 106 acquires the video signals, and renders the video signals as acquired onto a video plane. The video output unit 106 outputs the video plane as generated to the synthesis unit 117.

The selected language storage unit 107 stores therein a language code indicating a selected language. The selected language refers to a language of subtitles to be displayed along with video for a digital broadcast program. For example, users can set a desired language as the selected language by operating an input device such as a remote control in a state where a subtitle language setting screen is displayed on the display 12.

The subtitle management unit 108 receives the EIT packets and the subtitle packets from the demultiplexer 102. The subtitle management unit 108 includes an EIT decoder. The EIT decoder decodes the EIT packets to extract the program identification information and the language code. The subtitle management unit 108 passes the program identification information and the language code to the broadcast-communication collaboration control unit 109.

The subtitle management unit 108 also includes a subtitle decoder. The subtitle decoder decodes the subtitle packets to generate the caption management data and the caption statement data. Hereinafter, the caption management data and the caption statement data are collectively referred to as "subtitle data". The subtitle management unit 108 switches an output destination of the subtitle data between the timing control unit 112 and the broadcast subtitle screen generation unit 113 according to an instruction received from the broadcast-communication collaboration control unit 109.

The broadcast-communication collaboration control unit 109 compares the language code received from the subtitle management unit 108 and the language code stored in the selected language storage unit 107, and judges whether or not subtitles in the selected language are provided by broadcasting.

When the subtitles in the selected language are provided by broadcasting, the broadcast-communication collaboration control unit 109 instructs the subtitle management unit 108 to switch the output destination of the subtitle data to the broadcast subtitle screen generation unit 113.

When the subtitles in the selected language are not provided by broadcasting, the broadcast-communication collaboration control unit 109 instructs the alternative subtitle acquisition unit 110 to acquire the alternative subtitles in the selected language. In this case, the broadcast-communication collaboration control unit 109 passes the program identification information and the language code of the selected language to the alternative subtitle acquisition unit 110. The broadcast-communication collaboration control unit 109 also instructs the subtitle management unit 108 to switch the output destination of the subtitle data to the timing control unit 112.

Upon receiving the instruction from the broadcast-communication collaboration control unit 109, the alternative subtitle acquisition unit 110 transmits an alternative subtitle request including the program identification information and the language code of the selected language to the subtitle server 30 via the network. When the alternative subtitles in the selected language exist in the subtitle server 30, the alternative subtitle acquisition unit 110 receives the alternative subtitle data composed of the alternative subtitles and the synchronization identifier associated with each other. The alternative subtitle acquisition unit 110 and the subtitle server 30 receive and transmit the alternative subtitle data by using an existing protocol such as HTTP and WebSocket. By way of example, the alternative subtitle acquisition unit 110 in the present embodiment sequentially receives sets of alternative character strings and synchronization identifiers in accordance with the progress of a program, rather than receiving alternative subtitle data for the whole program at one time. The alternative subtitle acquisition unit 110 sequentially stores the sets of the alternative character strings and the synchronization identifiers as received in the alternative subtitle holding unit 111.

The alternative subtitle holding unit 111 is memory for temporarily holding the alternative subtitle data that the alternative subtitle acquisition unit 110 receives from the subtitle server 30.

FIG. 10 shows one example of the alternative subtitle data held in the alternative subtitle holding unit 111.

Alternative subtitle data 31 is alternative subtitle data acquired from the subtitle server 30 by the alternative subtitle acquisition unit 110 when the program identification information for a program being viewed is "AAAABBBB" and the selected language set by a user is "Hindi".

The alternative subtitle data 31 includes a plurality of synchronization identifiers and a plurality of subtitle statements (alternative character strings) in Hindi associated with the respective synchronization identifiers. For example, an alternative character string 311 associated with a synchronization identifier "AAAABBBB00000001" is a translation of a subtitle statement (character string) " 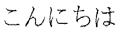 ("Hello" in Japanese)" in the broadcast subtitles having the same synchronization identifier "AAAABBBB00000001" in Hindi.

Similarly, an alternative character string 312 associated with a synchronization identifier "AAAABBBB00000002" is a translation of a subtitle statement (character string) in the broadcast subtitles having the same synchronization identifier "AAAABBBB00000002" in Hindi.

Further, an alternative character string 313 associated with a synchronization identifier "AAAABBBB00000003" is a translation of a subtitle statement (character string) in the broadcast subtitles having the same synchronization identifier "AAAABBBB00000003" in Hindi.

The alternative character strings 311, 312, 313, and so on shown in FIG. 10 are each a unit of the subtitles displayed on a single display screen. Although images of the subtitles in Hindi to be displayed on the display 12 are shown as the alternative character strings in the example shown in FIG. 10, the alternative subtitle holding unit 111 holds character codes for displaying these images in actuality. When the reception apparatus 11 holds a bitmap for displaying the subtitles in Hindi, the alternative subtitle holding unit 111 may hold a storage destination of the bitmap in place of the character codes.

The timing control unit 112 receives the subtitle data from the subtitle management unit 108. The subtitle data includes information for determining a timing at which the broadcast subtitles are displayed, as described above. At the timing at which the broadcast subtitles are displayed, the timing control unit 112 passes the synchronization identifier included in the subtitle data to the alternative subtitle screen generation unit 115 and instructs the alternative subtitle screen generation unit 115 to generate an alternative subtitle screen.

The broadcast subtitle screen generation unit 113 receives the subtitle data from the subtitle management unit 108. At the timing at which the broadcast subtitles are displayed, the broadcast subtitle screen generation unit 113 generates a subtitle plane based on a character string included in a data unit for a statement body in the subtitle data. Herein, the subtitle data includes information designating a display position (coordinate information), a character size, a character font, vertical or horizontal writing, character spacing, line spacing, and the like for use in expansion of character strings in the broadcast subtitles onto the subtitle plane. The broadcast subtitle screen generation unit 113 renders the character strings in the broadcast subtitles onto the subtitle plane in accordance with the information as described above. The broadcast subtitle screen generation unit 113 passes the subtitle plane as generated to the broadcast subtitle output unit 114.

The broadcast subtitle output unit 114 receives the subtitle plane from the broadcast subtitle screen generation unit 113, and outputs the received subtitle plane to the synthesis unit 117.

Upon receiving the instruction to generate the alternative subtitle screen from the timing control unit 112, the alternative subtitle screen generation unit 115 reads, from the alternative subtitle holding unit 111, an alternative character string associated with the synchronization identifier received from the timing control unit 112. The alternative subtitle screen generation unit 115 generates the subtitle plane based on the read alternative character string. The alternative subtitle screen generation unit 115 passes the generated subtitle plane to the alternative subtitle output unit 116.

As set forth above, the subtitle data includes the information designating the display position, the character size, the character font, and the like of the character strings in the broadcast subtitles. From among these types of information, information designating the display position, the character size, the line spacing, and the like are applicable even in different languages. The alternative subtitle screen generation unit 115 may thus render the alternative character strings onto the subtitle plane by using the display position, the character size, and the line spacing designated with respect to the broadcast subtitles. As for the character font, the vertical or horizontal writing, and the character spacing, the alternative subtitle screen generation unit 115 may use specified information stored in advance in the reception apparatus 11.

The alternative subtitle output unit 116 receives the subtitle plane from the alternative subtitle screen generation unit 115, and outputs the received subtitle plane to the synthesis unit 117.

The synthesis unit 117 synthesizes the video plane and the subtitle plane to generate a display screen. The synthesis unit 117 outputs the generated display screen to the display 12. That is to say, the broadcast subtitles are displayed on the display 12 when the synthesis unit 117 has received the subtitle plane from the broadcast subtitle output unit 114, and the alternative subtitles are displayed on the display 12 when the synthesis unit 117 has received the subtitle plane from the alternative subtitle output unit 116. In the present embodiment, the broadcast subtitles and the alternative subtitles are not displayed on the display 12 concurrently.

### (Hardware Configuration)

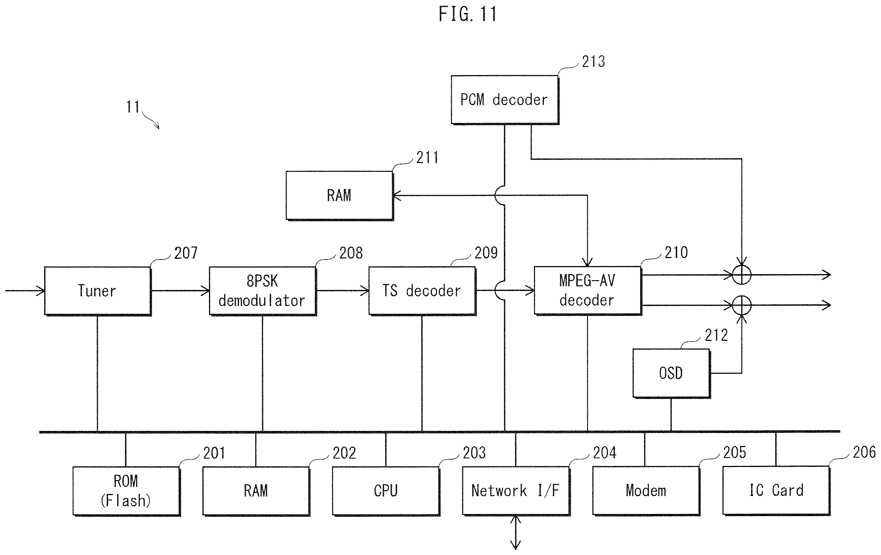

FIG. 11 shows one example of a hardware configuration of the reception apparatus 11.

As shown in FIG. 11, the reception apparatus 11 includes ROM (Flash) 201, RAM 202, a CPU 203, a network I/F 204, a modem 205, an IC Card 206, a tuner 207, an 8PSK demodulator 208, a TS decoder 209, an MPEG-AV decoder 210, RAM 211, an OSD 212, and a PCM decoder 213. The hardware as described above achieves various functions of the reception apparatus 11 in conjunction with a computer program.

### <2-4. Operation of Reception Apparatus 11>

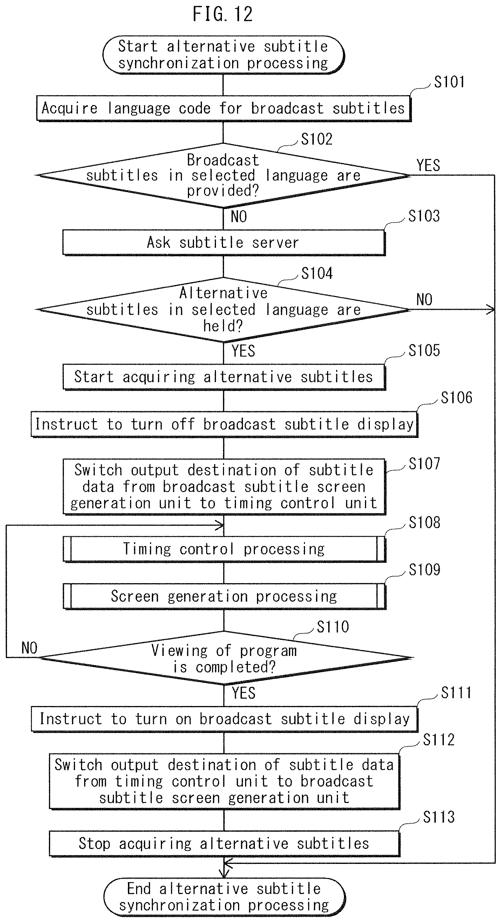

The following describes the alternative subtitle synchronization processing performed by the reception apparatus 11, with use of flow charts of FIGs. 12-14.

### (Alternative Subtitle Synchronization Processing)

Before the start of the alternative subtitle synchronization processing, the output destination of the subtitle data from the subtitle management unit 108 is set to the broadcast subtitle screen generation unit 113.

The alternative subtitle synchronization processing shown in FIGs. 12-14 is started upon the start of viewing of the broadcast-communication collaboration program. By analyzing a PMT and an EIT of a program viewing of which is started, the broadcast-communication collaboration control unit 109 can judge whether the program is the broadcast-communication collaboration program or not.

The broadcast-communication collaboration control unit 109 acquires a language code indicating a language of the broadcast subtitles received from the subtitle management unit 108 (step S101). When the language code for the broadcast subtitles is stored in the EIT, the subtitle management unit 108 may acquire the language code from the EIT. As shown in FIG. 3, the caption management data 130 includes the language code. Therefore, the subtitle management unit 108 may acquire the language code from the caption management data 130. The broadcast-communication collaboration control unit 109 compares the language code for the broadcast subtitles and the language code stored in the selected language storage unit 107, and judges whether or not subtitles in the selected language are provided by broadcasting.

When the subtitles in the selected language are provided by broadcasting (YES in step S102), the alternative subtitle synchronization processing is completed.

When the subtitles in the selected language are not provided by broadcasting (NO in step S102), the broadcast-communication collaboration control unit 109 passes the program identification information and the language code of the selected language to the alternative subtitle acquisition unit 110, and instructs the alternative subtitle acquisition unit 110 to acquire the alternative subtitles.

The alternative subtitle acquisition unit 110 may transmit the program identification information and the language code to the subtitle server 30, and the subtitle server 30 may notify the alternative subtitle acquisition unit 110 that transmission of the alternative subtitles is not possible when the subtitle server 30 does not hold the alternative subtitles for the program being viewed.

When the subtitle server 30 holds the alternative subtitles in the selected language (YES in step S104), the alternative subtitle acquisition unit 110 starts acquiring the alternative subtitle data, which is sets of alternative character strings and synchronization identifiers (step S105).

The alternative subtitle acquisition unit 110 repeats reception of one or more sets of alternative character strings and synchronization identifiers during viewing of the broadcast-communication collaboration program. The alternative subtitle acquisition unit 110 is required to receive an alternative character string from the subtitle server 30 and to hold the received alternative character string at least before reception of a character string in the broadcast subtitles having the same synchronization identifier.

The broadcast-communication collaboration control unit 109 then instructs the subtitle management unit 108 to turn off broadcast subtitle display (step S106). When the subtitle management unit 108 receives the instruction to turn off the broadcast subtitle display, the subtitle management unit 108 switches the output destination of the subtitle data from the broadcast subtitle screen generation unit 113 to the timing control unit 112 (step S107).

The timing control unit 112 then performs timing control processing (step S108), and the alternative subtitle screen generation unit 115 and the alternative subtitle screen output unit 116 perform screen generation processing (step S109). Details of the steps S108 and S109 are described later.

When viewing of the program is not completed (NO in step S110), processing in the steps S108 and S109 is repeated.

When viewing of the program is completed (YES in step S110), the broadcast-communication collaboration control unit 109 instructs the subtitle management unit 108 to turn on the broadcast subtitle display (step S111). When the subtitle management unit 108 receives the instruction to turn on the broadcast subtitle display, the subtitle management unit 108 switches the output destination of the subtitle data from the timing control unit 112 to the broadcast subtitle screen generation unit 113 (step S112). The completion of viewing of the program herein refers, for example, to a case where a user changes the channel or a case where the broadcast-communication collaboration program ends with time.

Next, the broadcast-communication collaboration control unit 109 instructs the alternative subtitle acquisition unit 110 to stop acquiring the alternative subtitles. The alternative subtitle acquisition unit 110 then terminates the processing to acquire the alternative subtitles from the subtitle server 30 (step S113).

### (Timing Control Processing)

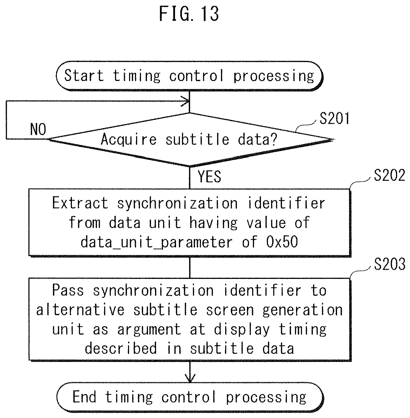

FIG. 13 is a flow chart showing the timing control processing performed by the timing control unit 112. This operation is the details of the step S108 shown in FIG. 12.

The timing control unit 112 judges whether or not the subtitle data is acquired from the subtitle management unit 108. When the subtitle data is acquired (YES in step S201), the processing proceeds to step S202. When the subtitle data is not acquired (NO in step S201), the timing control unit 112 continues monitoring to judge whether or not the subtitle data is acquired from the subtitle management unit 108.

When the subtitle data is acquired, the timing control unit 112 reads the data_unit_data_byte field in a data unit having a value of the data_unit_parameter of 0x50, and extracts the synchronization identifier (step S202).

The timing control unit 112 then waits until the timing at which the broadcast subtitles are displayed. At the timing at which the broadcast subtitles are displayed, the timing control unit 112 passes the synchronization identifier extracted in step S202 to the alternative subtitle screen generation unit 113 as an argument (step S203).

The timing at which the broadcast subtitles are displayed is determined by values of the TMD and the STM in the caption statement data (see FIGs. 4 and 7), values of the TMD and the OTM in the caption management data (see FIG. 3), and the presentation time stamp (PTS).

The timing control unit 112 is not required to pass the synchronization identifier to the alternative subtitle screen generation unit 113 at exactly the same timing as the timing at which the broadcast subtitles are displayed. For example, when it takes time for the alternative subtitle screen generation unit 113 to generate the subtitle plane, the timing control unit 112 may pass the synchronization identifier to the alternative subtitle screen generation unit 113 before the timing at which the broadcast subtitles are displayed.

### (Screen Generation Processing)

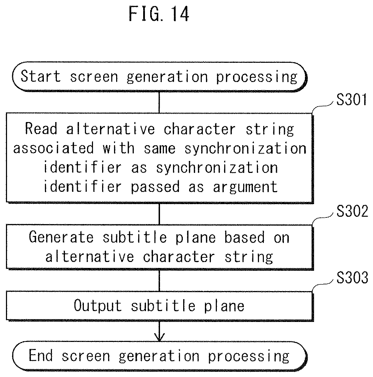

FIG. 14 is a flow chart showing the screen generation processing performed by the alternative subtitle screen generation unit 115 and the alternative subtitle screen output unit 116. This operation is the details of the step S109 shown in FIG. 12. The processing is started upon the alternative subtitle screen generation unit 115 receiving the synchronization identifier from the timing control unit 112.

The alternative subtitle screen generation unit 115 reads, from the alternative subtitle holding unit 111, an alternative character string associated with the same synchronization identifier as the synchronization identifier passed from the timing control unit 112 as the argument (step S301). The alternative subtitle screen generation unit 115 generates the subtitle plane based on the read alternative character string (step S302). The alternative subtitle screen generation unit 115 passes the generated subtitle plane to the alternative subtitle output unit 116.

The alternative subtitle output unit 116 outputs the subtitle plane to the synthesis unit 117 (step S303).

Operational orders shown in FIGs. 12-14 are just specific examples. Orders of the steps may be switched as appropriate.

### <2-5. Effects>

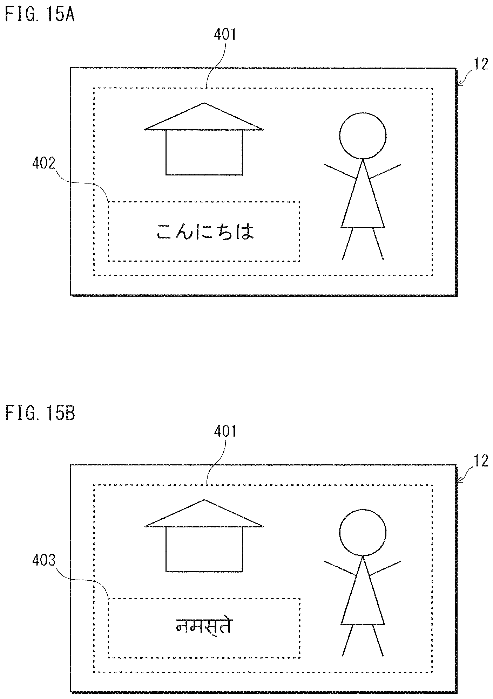

The following describes effects of the present embodiment, with use of a specific example illustrated in FIGs. 15A and 15B.

FIG. 15A illustrates a state where a display screen generated from the video plane and the subtitle plane generated based on the broadcast subtitles is displayed on the display 12. The display screen includes video 401 including a house and a person, and a character string 402 in Japanese.

As described above, with respect to the character string 402 in Japanese in the broadcast subtitles, a display timing used for outputting the character string 402 in synchronization with the video 401 is designated. In order to display the alternative subtitles (e.g. subtitles in Hindi) in place of the broadcast subtitles, the reception apparatus 11 in the present embodiment outputs an alternative character string in Hindi corresponding to the character string 402 in Japanese at the display timing designated with respect to the character string 402 in Japanese. As such, an alternative character string 403 in Hindi can be displayed on the display 12 in synchronization with the video 401, as illustrated in FIG. 15B.

As described above, even in a case of subtitles in a language not provided by the broadcasting apparatus 20, the reception apparatus 11 can output the alternative subtitles acquired from the subtitle server 30 via the network in synchronization with the video for a broadcast program.

### <3. Embodiment 2>

The following describes a broadcast-communication collaboration system 2 as another aspect of the broadcast-communication collaboration system according to the present invention.

### <3-1. Structure of Broadcast-communication Collaboration System 2>

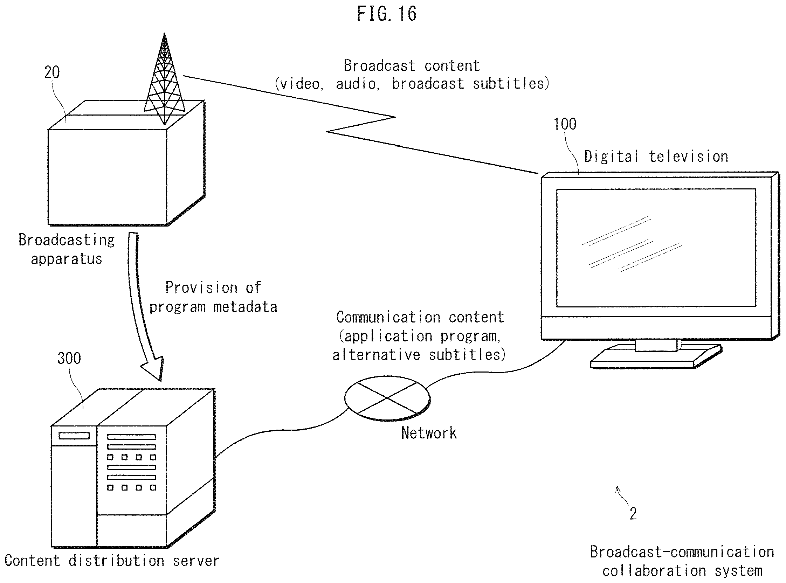

FIG. 16 shows the structure of the broadcast-communication collaboration system 2. As shown in FIG. 16, the broadcast-communication collaboration system 2 includes a digital television 100, the broadcasting apparatus 20, which is similar to that in Embodiment 1, and a content distribution server 300.

The content distribution server 300 is owned by a service provider, and has a function to distribute communication content including an application program for achieving various services and data used by the application program. The application program herein includes a non-collaboration application program that runs independently of broadcast content, and a collaboration application program that is executed only during viewing of broadcast content corresponding thereto and runs in conjunction with the broadcast content. In the present embodiment, application programs distributed by the content distribution server 300 are collaboration application programs for displaying alternative subtitles in languages desired by users.

The digital television 100 receives broadcast content from the broadcasting apparatus 20. The digital television 100 also downloads an application program for subtitle display from the content distribution server 300. By executing the downloaded application program, the digital television 100 acquires alternative subtitles from the content distribution server 300, and outputs the acquired alternative subtitles in synchronization with video and audio constituting the broadcast content.

### <3-2. Structure of Digital Television 100>

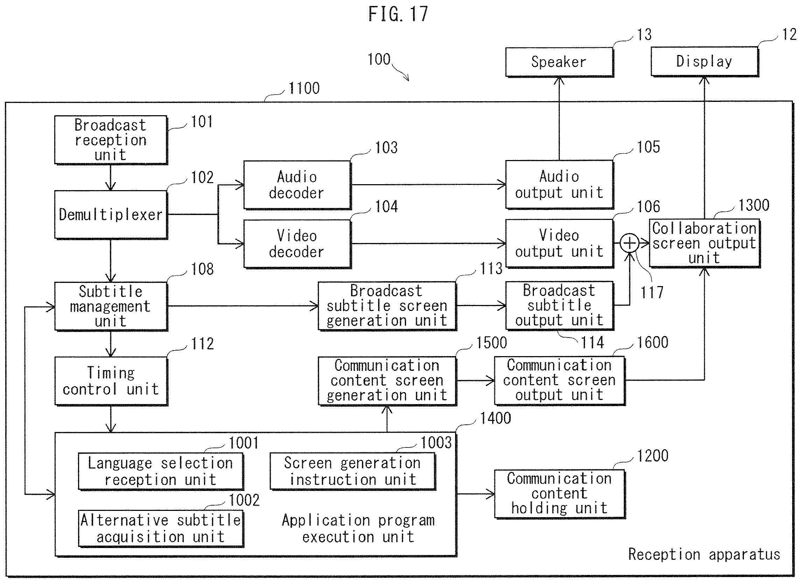

FIG. 17 is a block diagram showing a functional structure of the digital television 100. As shown in FIG. 17, the digital television 100 includes a reception apparatus 1100, the display 12, and the speaker 13.

The reception apparatus 1100 includes the broadcast reception unit 101, the demultiplexer 102, the audio decoder 103, the video decoder 104, the audio output unit 105, the video output unit 106, the subtitle management unit 108, the timing control unit 112, the broadcast subtitle screen generation unit 113, the broadcast subtitle output unit 114, the synthesis unit 117, a communication content holding unit 1200, a collaboration screen output unit 1300, an application program execution unit 1400, a communication content screen generation unit 1500, and a communication content screen output unit 1600.

The broadcast reception unit 101, the demultiplexer 102, the audio decoder 103, the video decoder 104, the audio output unit 105, the video output unit 106, the subtitle management unit 108, the timing control unit 112, the broadcast subtitle screen generation unit 113, and the broadcast subtitle output unit 114 are as previously described. The data structure of the subtitle data that the reception apparatus 1100 receives is also as previously described.

The communication content holding unit 1200 corresponds to an application program holding unit and an alternative subtitle holding unit according to the present invention. The communication content holding unit 1200 holds communication content that the reception apparatus 1100 has received from the content distribution server 300. The communication content is specifically an application program for providing alternative subtitles in a language desired by a user, and the alternative subtitles acquired by running the application program.

The collaboration screen output unit 1300 generates a collaboration screen including the display screen generated from the broadcast content and a communication content screen generated from the communication content, and outputs the generated collaboration screen to the display 12.

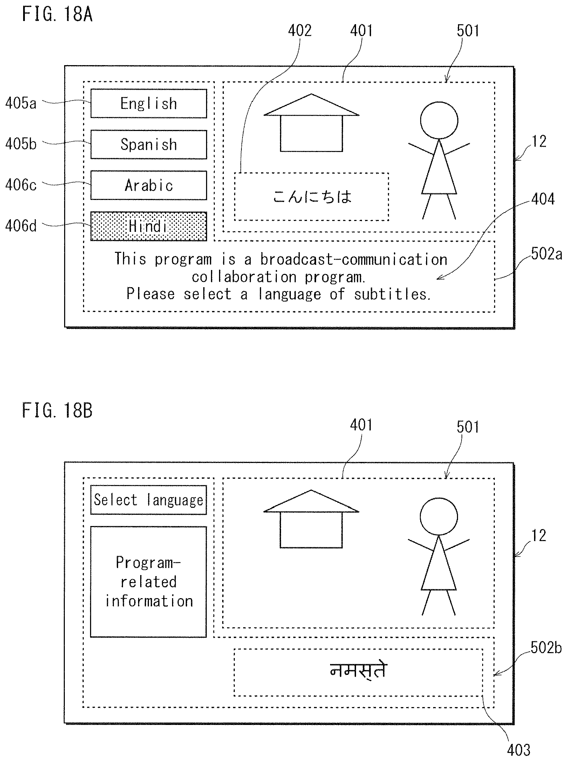

FIGs. 18A and 18B show a specific example of the collaboration screen generated by the collaboration screen output unit 1300. The collaboration screen shown in FIG. 18A includes a display screen 501 and a communication content screen 502a.

As with the display screen (see FIGs. 15A and 15B) described in Embodiment 1, the display screen 501 includes video 401 and a character string 402 in the broadcast subtitles. The display screen 501 is displayed in a rectangular region on the top right of the display 12, for example.

The communication content screen 502a is generated by the application program execution unit 1400 (described later) executing an application program. The communication content screen 502a includes a message "This program is a broadcast-communication collaboration program. Please select a language of subtitles." 404, as well as an "English" button 405a, a "Spanish" button 405b, an "Arabic" button 406c, and a "Hindi" button 406d, which are objects for receiving setting of a selected language. The communication content screen 502a is displayed in an L-shaped display area on the display 12, for example.

As shown in FIG. 17, the application program execution unit 1400 includes a language selection reception unit 1001, an alternative subtitle acquisition unit 1002, and a screen generation instruction unit 1003. These functional units achieve the following functions by execution of the application program held by the communication content holding unit 1200.

The language selection reception unit 1001 receives setting of a language selected by a user, and passes a language code of the selected language to the alternative subtitle acquisition unit 1002.

For example, when a user selects the "Hindi" button 406d by using an input device such as a remote control in a state where a collaboration screen shown in FIG. 18A is displayed on the display 12, the language selection reception unit 1001 passes a language code "hin" for identifying Hindi to the alternative subtitle acquisition unit 102.

The alternative subtitle acquisition unit 1002 acquires program identification information for a program being viewed from the subtitle management unit 108, and receives the language code from the language selection reception unit 1001. The alternative subtitle acquisition unit 1002 transmits the program identification information and the language code to the content distribution server 300, and acquires the alternative subtitles from the content distribution server 300. The alternative subtitle acquisition unit 1002 stores the acquired alternative subtitles in the communication content holding unit 1200. At the start of acquisition of the alternative subtitles, the alternative subtitle acquisition unit 1002 instructs the subtitle management unit 108 to turn off broadcast subtitle display.

The screen generation instruction unit 1003 monitors an event indicating a timing at which the alternative subtitles are displayed. When the event occurs, the screen generation instruction unit 1003 reads an alternative character string from the communication content holding unit 1200. The screen generation instruction unit 1003 passes the read alternative character string to the communication content screen generation unit 1500, and instructs the communication content screen generation unit 1500 to generate a communication content screen including the alternative character string.

Upon receiving the instruction from the application program execution unit 1400, the communication content screen generation unit 1500 generates the communication content screen. The communication content screen generation unit 1500 passes the generated communication content screen to the communication content screen output unit 1600.

The communication content screen output unit 1600 outputs the communication content screen to the collaboration screen output unit 1300.

For example, when the "Hindi" button 406d is selected in the communication content screen 502a shown in FIG. 18A, the communication content screen generation unit 1500 receives an alternative character string in Hindi from the screen generation instruction unit 1003. The communication content screen generation unit 1500 generates a communication content screen 502b including the alternative character string 403 in Hindi as illustrated in FIG. 18B.

As with the reception apparatus 11 in Embodiment 1, the reception apparatus 1100 includes hardware including ROM (Flash), RAM, CPU, a network I/F, a modem, an IC Card, a tuner, an 8PSK demodulator, a TS decoder, an MPEG-AV decoder, an OSD, and a PCM decoder. The hardware as described above achieves various functions of the reception apparatus 1100 in conjunction with a computer program.

### <3-3. Operation of Reception Apparatus 1100>

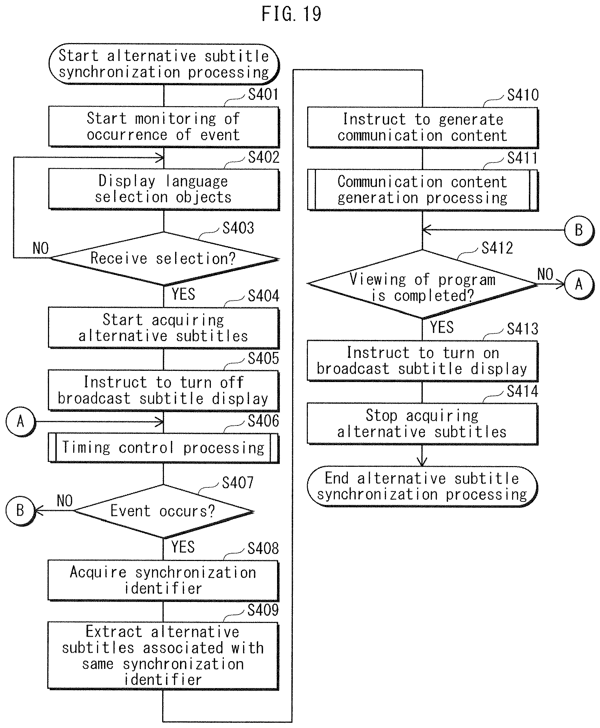

The following describes the alternative subtitle synchronization processing performed by the reception apparatus 1100, with use of flow charts in FIGs. 19-21.

By way of example, an URL indicating an acquisition source of an application program for subtitle display is described in a broadcast-communication collaboration program, and, when viewing of the broadcast-communication collaboration program is started, the reception apparatus 1100 accesses the URL, and downloads the application program for subtitle display from the content distribution server 300. The downloaded application program is stored in the communication content holding unit 1200.

Operation shown in FIGs. 19-21 is started by activating the application program for subtitle display.

### (Alternative Subtitle Synchronization Processing)

Before the start of the alternative subtitle synchronization processing, the output destination of the subtitle data from the subtitle management unit 108 is set to the broadcast subtitle screen generation unit 113.

The screen generation instruction unit 1003 included in the application program execution unit 1400 starts monitoring of occurrence of an event (step S401). The "event" in step S401 refers to passing a synchronization identifier from the timing control unit 112 to a callback function in the screen generation instruction unit 1003.

When the application program for subtitle display is activated, the language selection reception unit 1001 included in the application program execution unit 1400 instructs, via the screen generation instruction unit 1003, the communication content screen generation unit 1500 to generate a communication content screen including language selection objects.

The communication content screen generation unit 1500 generates the communication content screen 502a including the language selection objects (the "English" button 405a, the "Spanish" button 405b, the "Arabic" button 406c, and the "Hindi" button 406d), for example, as illustrated in FIG. 18A. A collaboration screen including the communication content screen 502a is then displayed on the display 12 (step S402).

The language selection reception unit 1001 judges whether or not setting of the selected language has received. When setting of the selected language has not been received (NO in step S403), the language selection reception unit 1001 does not perform screen update, and continues displaying the language selection objects. When the setting of the selected language has received (YES in step S403), the language selection reception unit 1001 passes the program identification information and the language code of the selected language to the alternative subtitle acquisition unit 1002, and instructs the alternative subtitle acquisition unit 1002 to acquire the alternative subtitles.

In Embodiment 2, description is made on the assumption that the language selection objects corresponding to languages not provided as the languages of the broadcast subtitles are displayed. Therefore, in Embodiment 2, after setting of the selected language is received, processing to check whether or not subtitles in the selected language are provided from the broadcasting apparatus 20 is not performed. If a language selection object corresponding to a language provided as a language of the broadcast subtitles is displayed, processing to check whether or not subtitles in the selected language are provided by broadcasting may be performed after an answer to the question in step S403 is YES.

Upon receiving the instruction to acquire the alternative subtitles from the language selection reception unit 1001, the alternative subtitle acquisition unit 1002 starts acquiring the alternative subtitles (step S404), and then instructs the subtitle management unit 108 to turn off broadcast subtitle display (step S405). Upon receiving the instruction to turn off the broadcast subtitle display, the subtitle management unit 108 switches the output destination of the subtitle data from the broadcast subtitle screen generation unit 113 to the timing control unit 112. The alternative subtitle acquisition unit 1002 stores the alternative subtitles acquired from the content distribution server 300 in the communication content holding unit 1200.

In Embodiment 2, description is made on the assumption that language selection objects corresponding to languages of the alternative subtitles held by the content distribution server 300 are displayed. Therefore, in Embodiment 2, processing to ask the content distribution server 300 if the content distribution server 300 holds the alternative subtitles in the selected language is not performed.

The timing control unit 112 performs timing control processing (step S406).

When no event occurs (NO in step S407), the processing proceeds to step S412.

When any event occurs (YES in step S407) and the callback function is notified of the synchronization identifier (step S408), the screen generation instruction unit 1003 extracts an alternative character string from the communication content holding unit 1200 by using the language code of the selected language and the synchronization identifier acquired in step S408 as arguments (step S409). The screen generation instruction unit 1003 instructs the communication content screen generation unit 1500 to generate a communication content screen including the alternative subtitles, and passes the alternative character string extracted in step S409 to the communication content screen generation unit 1500 (step S410).

The communication content screen generation unit 1500 generates the communication content screen (step S411). The communication content screen is then updated, and the alternative character string is displayed on the display 12.

When viewing of the program is not completed (NO in step S412), the processing returns to step S406 and is continued.

When viewing of the program is completed (YES in step S412), the alternative subtitle acquisition unit 1002 included in the application program execution unit 1400 instructs the subtitle management unit 108 to turn on broadcast subtitle display (step S413). The completion of viewing of the program herein refers, for example, to a case where a user changes the channel, a case where the broadcast-communication collaboration program ends with time, and display of the application program for subtitle display is completed by a user.

Upon receiving the instruction to turn on the broadcast subtitle display, the subtitle management unit 108 switches the output destination of the subtitle data from the timing control unit 112 to the broadcast subtitle screen generation unit 113. The alternative subtitle acquisition unit 1003 then terminates the processing to acquire the alternative subtitles from the content distribution server 300 (step S414).

An operational order shown in FIG. 19 is just a specific example. An order of the steps may be switched as appropriate.

### (Timing Control Processing)

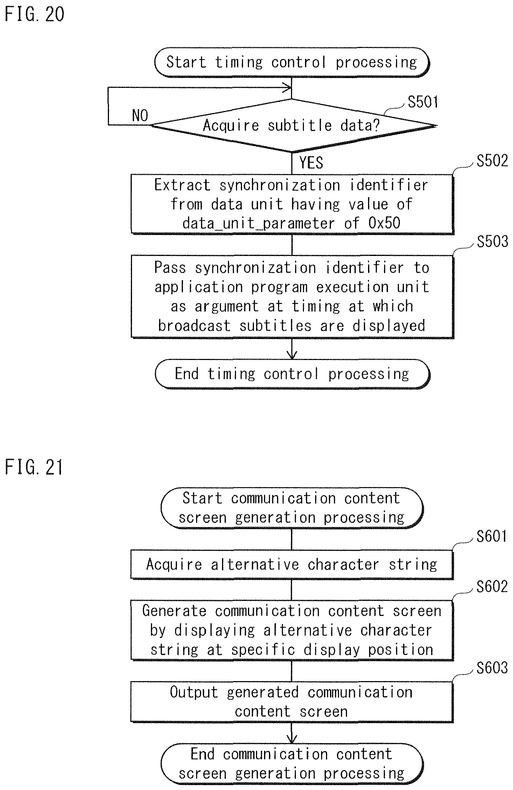

FIG. 20 is a flow chart showing the timing control processing performed by the timing control unit 112. This operation is the details of the step S406 shown in FIG. 19.

The timing control unit 112 judges whether or not the subtitle data is acquired from the subtitle management unit 108. When the subtitle data is acquired (YES in step S501), the processing proceeds to step S502. When the subtitle data is not acquired (NO in step S501), the timing control unit 112 continues monitoring to judge whether or not the subtitle data is acquired from the subtitle management unit 108.

When the subtitle data is acquired, the timing control unit 112 reads the data_unit_data_byte field in a data unit having a value of the data_unit_parameter of 0x50, and extracts the synchronization identifier (step S502).

The timing control unit 112 then waits until the timing at which the broadcast subtitles are displayed. At the timing at which the broadcast subtitles are displayed, the timing control unit 112 passes the synchronization identifier extracted in step S502 to the callback function in the screen generation instruction unit 1003 included in the application program execution unit 1400 as an argument (step S503).

The timing control unit 112 is not required to pass the synchronization identifier to the screen generation instruction unit 1003 at exactly the same timing as the timing at which the broadcast subtitles are displayed. For example, when it takes time for the screen generation instruction unit 1003 and the communication content screen generation unit 1500 to generate the subtitle plane, the timing control unit 112 may pass the synchronization identifier to the screen generation instruction unit 1003 before the timing at which the broadcast subtitles are displayed.

### (Communication Content Screen Generation Processing)

FIG. 21 is a flow chart showing communication content screen generation processing performed by the communication content screen generation unit 1500 and the communication content screen output unit 1600. This operation is the details of the step S411 shown in FIG. 19. This processing is started by the communication content screen generation unit 1500 receiving the instruction to generate the communication content screen from the screen generation instruction unit 1003 included in the application program execution unit 1400.

The communication content screen generation unit 1500 acquires an alternative character string from the screen generation instruction unit 1003 (step S601). The communication content screen generation unit 1500 generates the communication content screen by displaying the acquired alternative character string with a specific size at a specific display position (step S602). By way of example, the communication content screen generation unit 1500 may display the alternative character string 403 on the bottom right of an L-shaped display area (under the display screen 401), as illustrated in FIG. 18B. The communication content screen generation unit 1500 passes the generated communication content screen to the communication content screen output unit 1600.

The communication content screen output unit 1600 outputs the communication content screen to the collaboration screen output unit 1300 (step S603).

Processing in steps other than the steps S406 and S411, from among the steps shown in FIGs. 19-21, are achieved by the application program execution unit 1400 executing the application program for subtitles display. Data transfer between the application program execution unit 1400 and other functional units is performed by defining a handler and a callback function in advance and using an application programming interface (API) of the reception apparatus 1100.

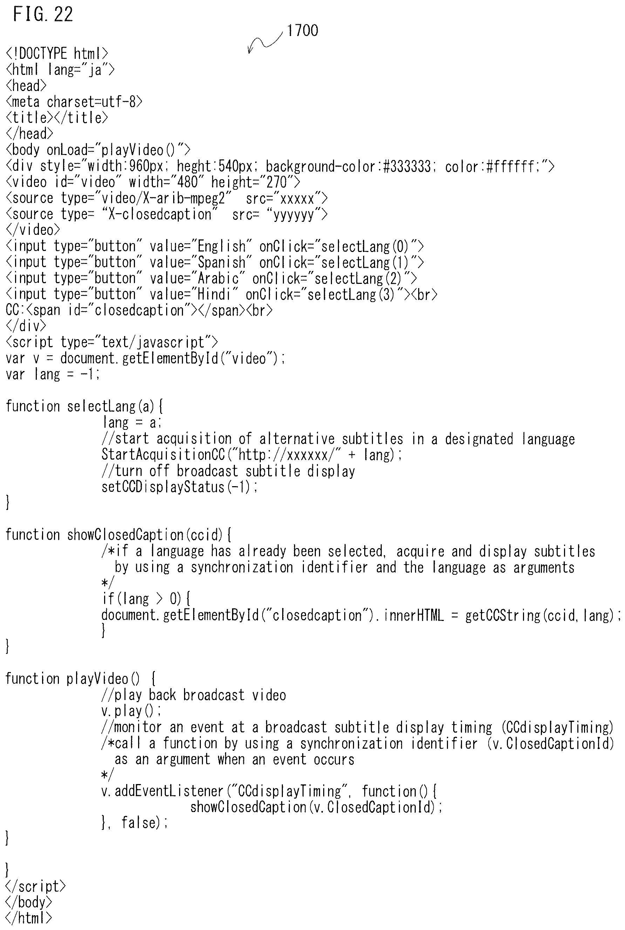

The aforementioned alternative subtitle synchronization processing is achieved by using an HTML file 1700 shown in FIG. 22, for example. As such, in Embodiment 2, the alternative subtitle synchronization processing is achieved by describing a script for operating the reception apparatus 1100 in the HTML file 1700, which is the communication content.

### <3-4. Effects>

As set forth above, in Embodiment 2, the application program for subtitle display working in conjunction with the broadcast program achieves the alternative subtitle synchronization processing.

For example, when a user selects the "Hindi" button 406d on the communication content screen 502a displayed on the display 12 shown in FIG. 18A, the communication content screen 502a transitions to the communication content screen 502b shown in FIG. 18B.

On the communication content screen 502b, the alternative character string 403 in Hindi for the video 401 as the broadcast content is displayed. As described in Embodiment 1, the alternative character string 403 is a Hindi translation of the character string 402 in Japanese, which is the broadcast subtitles for the video 401.

As described above, by executing the application program for subtitles display acquired from the content distribution server 300 via the network, the reception apparatus 1100 can acquire subtitles in languages not provided by the broadcasting apparatus 20, and output the acquired subtitles in synchronization with the broadcast video.

### <4. Other Modifications>

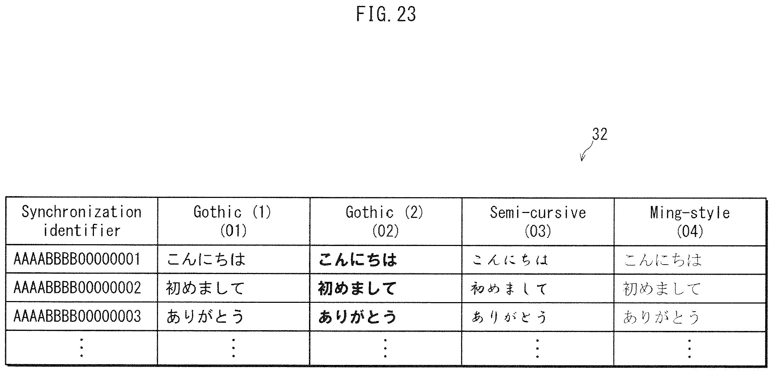

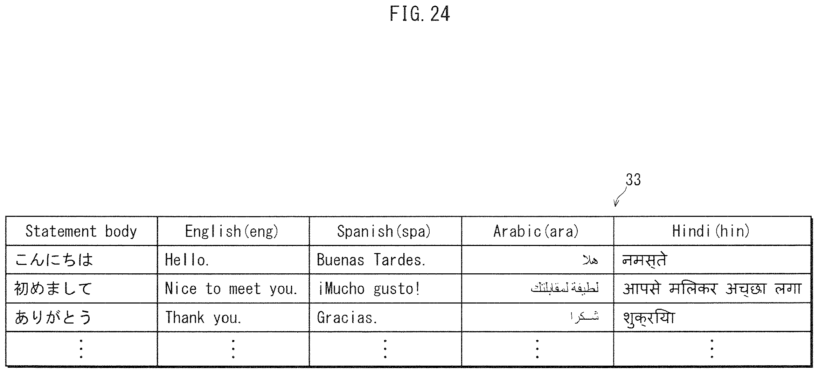

Embodiments of the reception apparatus, the broadcast-communication collaboration system, and the broadcast-communication collaboration method as aspects of the present invention have been described above. The reception apparatus, the broadcast-communication collaboration system, and the broadcast-communication collaboration processing as exemplified above may be modified as described below. Needless to say, the reception apparatus, the broadcast-communication collaboration system, and the broadcast-communication collaboration method according to the present invention are not limited to those described in the aforementioned embodiments.
(1) In Embodiment 1 described above, in displaying the alternative subtitles, alternative character strings are rendered onto the subtitle plane by using the display position and the character size designated with respect to the broadcast subtitles. The present invention, however, is not limited to this structure. For example, the subtitle server 30 may hold, for the alternative subtitles as a whole or for each of the alternative character strings, control information for subtitle display designating, for example, a display position (coordinate information), a character size, a display time, and display effects, and the reception apparatus 11 may acquire the control information along with the alternative subtitles from the subtitle server 30. The reception apparatus 11 may display the alternative character strings in accordance with the control information.
(2) In Embodiment 2 described above, in generating the communication content screen including alternative character strings, the communication content screen generation unit 1500 displays the alternative character strings with a specific size at a specific display position. The present invention, however, is not limited to this structure. The communication content screen generation unit 1500 may generate the communication content screen by using the control information for subtitle display designated with respect to the broadcast subtitles, as with the alternative subtitle screen generation unit 115 in Embodiment 1.
(3) The alternative subtitle screen generation unit 115 in Embodiment 1 described above and the communication content screen generation unit 1500 in Embodiment 2 described above may analyze the eight-level code included in the data unit for the statement body in the subtitle data (0x20), acquire coordinate information, a character size, a character font, display time information, display effect information, and the like from the control code included in the eight-level code, and display the alternative character strings by using the information as acquired. The information as described above may be acquired by analyzing data units other than the data unit for the statement body, such as the data unit for the geometric (0x28) and the data unit for the bitmap (0x35).
   For example, an "SDF" and an "SDP" as control codes included in the eight-level code respectively indicate a screen display size and initial coordinates of the display area. These control codes may thus be used as codes indicating a display position of the alternative character strings.
   Further, an "SWF" as a control code included in the eight-level code indicates format selection. This control code may thus be used as a code indicating a format of the alternative character strings. A "CS" as a control code included in the eight-level code indicates screen deletion. Thus, when the broadcast subtitles including this control code are acquired, an alternative character string being displayed may be deleted. An "SCR" as a control code included in the eight-level code indicates scrolling. Thus, when the broadcast subtitles including this control code are acquired, alternative character strings may be displayed so as to be scrolled.
(4) In Embodiment 1 described above, the data structure in which the data unit for the statement body and the data unit for broadcast-communication synchronization identification are stored in the caption statement data is described as an example (FIG. 7). In Embodiments 1 and 2, however, when the data unit for the statement body is stored in the caption management data, the data unit for broadcast-communication synchronization identification is also stored in the caption management data and transmitted.
(5) In Embodiment 1 and 2 described above, the synchronization identifier is transmitted by newly defining the data unit for broadcast-communication synchronization identification. The present invention, however, is not limited to this structure. For example, the synchronization identifier may be stored in a field that is defined but is not used, and transmitted. Alternatively, the synchronization identifier may be stored in a reserve area, and transmitted. That is to say, the synchronization identifier may be transmitted by using an existing field, as long as the synchronization identifier and the character string in the broadcast subtitles corresponding thereto are associated with each other in order for the reception apparatus to perform the above-mentioned alternative subtitle synchronization processing.
(6) In Embodiments 1 and 2 described above, the synchronization identifier may be described in the data unit for the statement body and transmitted by extending the control code included in the eight-level code. For example, control codes "CCS" and "CCE" may be newly defined as the control codes included in the eight-level code. When the "CCS" exists at the head of the eight-level code included in the data unit for the statement body, text immediately after the "CCS" to text immediately before the "CCE" may be treated as the synchronization identifier, and text after the "CCE" may be treated as the statement body in the subtitle data.
(7) In Embodiments 1 and 2 described above, the data unit for the statement body and the data unit for broadcast-communication synchronization identification are transmitted as a set. The present invention, however, is not limited to this structure. The data unit for broadcast-communication synchronization identification and a data unit other than the data unit for the statement body may be transmitted as a set. Alternatively, the data unit for broadcast-communication synchronization identification may be transmitted alone. However, even in these cases, the synchronization identifier is required to be associated with the character string in the broadcast subtitles corresponding thereto in order for the reception apparatus to perform the above-mentioned alternative subtitle synchronization processing.
(8) In Embodiments 1 and 2 described above, the timing at which the reception apparatus acquires the alternative subtitles from the server is not limited to the timing described in the above-mentioned embodiments. For example, when the program identification information for each program and the language code for the broadcast subtitles are included in program schedule information such as an EPG, the reception apparatus may acquire, for each program not broadcast in the selected language, the alternative subtitles in the selected language from the server in advance of reception of the program. In this case, depending on a storage capacity in a storage area for holding the alternative subtitles, the alternative subtitles for programs broadcast in a day or the alternative subtitles for programs broadcast in several hours may be acquired. The alternative subtitles may be acquired for a program reserved for viewing or recording. It is desirable to delete unnecessary alternative subtitles held in the storage area when broadcasting of the program ends.
(9) In Embodiments 1 and 2 described above, the reception apparatus sequentially receives one or more sets of the synchronization identifiers and the alternative character strings at a time from the server in accordance with the progress of the program. With this structure, the reception apparatus can respond flexibly even in a case where alternative subtitles to be displayed change in accordance with the progress of the program. The present invention, however, is not required to have this structure. The reception apparatus may receive alternative subtitle data for a single program from the server at one time, when viewing of the program is started.
(10) In Embodiment 1 described above, the reception apparatus is required to receive an alternative character string from the server by the time when a character string in the broadcast subtitles having the same synchronization identifier as the alternative character string is received at the latest. If acquisition of an alternative character string to be displayed is delayed, and the alternative character string cannot be displayed in synchronization with video, the reception apparatus may stop the alternative subtitle synchronization processing when reception of the alternative character string is delayed more than a predetermined time period. When an alternative character string to be displayed next is not received, the reception apparatus may continue displaying the preceding alternative character string for a given time period even when a display end time of the preceding alternative character string has passed.
(11) In Embodiments 1 and 2 described above, the reception apparatus acquires the alternative subtitles from the server connected via the network. An acquisition source of the alternative subtitles, however, is not limited to the server on the network. For example, a portable recording medium, such as a DVD and a BD, on which the subtitle database shown in FIG. 8 is recorded may be attached to the reception apparatus, and the alternative subtitles in the selected language may be read from the recording medium. The reception apparatus may receive the alternative subtitles transmitted from the broadcasting station by broadcasting. In this case, it is desirable to transmit the alternative subtitles before a broadcasting time of the broadcast content during a time in which main broadcasting is not conducted, for example, at night.
(12) In Embodiments 1 and 2 described above, the reception apparatus turns off broadcast subtitle display when the alternative subtitles are displayed. In Embodiment 2, however, the reception apparatus is not required to have this structure. As illustrated in FIGs. 18A and 18B, in Embodiment 2, the broadcast subtitles and the alternative subtitles are displayed in different regions. Therefore, the broadcast subtitles and the alternative subtitles do not overlap each other even when broadcast subtitle display is not turned off. The reception apparatus may not perform processing to turn off broadcast subtitle display even when the alternative subtitles are displayed. In this case, the broadcast subtitles and the alternative subtitles are displayed on the display concurrently. Alternatively, the reception apparatus may allow a user to select whether or not broadcast subtitle display is turned off, and may turn on or off broadcast subtitle display in accordance with the result of the selection.
(13) In Embodiments 1 and 2 described above, when the broadcast subtitles are in Japanese, translations of Japanese subtitle statements in other languages including English, Spanish, Arabic, and Hindi are used as specific examples of the alternative subtitles. The alternative subtitles according to the present invention, however, are not limited to the above-mentioned alternative subtitles. The following describes other examples of the alternative subtitles.
   For example, when the broadcast subtitles are in Japanese, Japanese subtitles having a higher image quality than the broadcast subtitles may be used as the alternative subtitles. In Embodiments 1 and 2 described above, the reception apparatus does not acquire the alternative subtitles when the subtitles in the selected language are provided by broadcasting. However, even when the selected language and the broadcast subtitles are both in Japanese, the reception apparatus may acquire the Japanese alternative subtitles having a higher image quality than the broadcast subtitles from the server, and perform the alternative subtitle synchronization processing. In this case, the reception apparatus may ask a user if the user requires the alternative subtitles having a higher image quality before acquisition, and may acquire the alternative subtitles having a higher image quality from the server only when the user requires the alternative subtitles having a higher image quality.
   When the broadcast subtitles are provided in a specific style (format) in a specific font (typeface) in Japanese, broadcast subtitles in a different style may be used as the alternative subtitles. Examples of the broadcast subtitles in the different style include broadcast subtitles in bold or in italics, broadcast subtitles as outline characters, shadowed characters, or 3D characters.
   As shown in FIG. 23, broadcast subtitles in a different font may be used as the alternative subtitles. FIG. 23 shows one example of a database managed by the server. A subtitle database 32 manages, as alternative character strings, character strings in the broadcast subtitles represented in a plurality of different fonts, such as a Gothic font (1), a Gothic font (2), a semi-cursive font, and a Ming-style font, in association with respective synchronization identifiers.
   The reception apparatus may receive selection of a desired font from a user, and, when the broadcast subtitles in the desired font are not provided by broadcasting, may acquire the alternative subtitles in the desired font from the server. In this case, the reception apparatus may transmit a number or other identifiers for identifying the font to the server, instead of transmitting a language code for identifying the selected language of the subtitles.
   Alternatively, combinations of any of a language, a style, and a font may be used as the alternative subtitles. For example, combinations "English", "English, lower-case", "English, upper-case, 3D", "Japanese, semi-cursive, bold", "Japanese, with kana pronouncing", "Spanish, italic", "Arabic, large-size", and "Hindi, small-size, bold" may each be used as the alternative subtitles, and the above-mentioned alternative subtitle synchronization processing may be performed.
   That is to say, the alternative subtitles according to the present invention are composed of character strings that are alternatives to the character strings constituting the broadcast subtitles in a different representation. Any representation may be used as long as synonymy between the character strings constituting the alternative subtitles and the character strings constituting the broadcast subtitles is ensured to some extent.
(14) In Embodiments 1 and 2 described above, synchronization identifiers are used to associate the character strings constituting the broadcast subtitles with the character strings constituting the alternative subtitles. However, the character strings in the broadcast subtitles themselves may be used as identifiers for associating the character strings constituting the broadcast subtitles with the character strings constituting the alternative subtitles corresponding to the broadcast subtitles.
   In this case, the broadcasting apparatus is not required to transmit the data unit for broadcast-communication synchronization identification. The server manages a subtitle database 33 as shown in FIG. 24. The subtitle database 33 manages the character strings constituting the broadcast subtitles in association with a plurality of alternative character strings that are translations of the character strings constituting the broadcast subtitles in a plurality of other languages.
   The alternative subtitle acquisition unit included in the reception apparatus acquires, from the server, the character strings constituting the broadcast subtitles and the alternative character strings constituting the selected language as a set, and stores the set as acquired in the alternative subtitle holding unit (the communication content holding unit in Embodiment 2). The timing control unit 112 extracts a subtitle statement (a character string) from the data unit for the statement body of the broadcast subtitles, and reads an alternative character string associated with the extracted subtitle statement from the alternative subtitle holding unit.
   This modification requires an assumption that the same subtitle statement does not appear in a single program more than once. When a storage capacity of the alternative subtitle holding unit is limited, and the alternative subtitle holding unit does not hold all the alternative subtitles for a single program but holds the alternative subtitles for part of the program, this modification requires an assumption that the alternative subtitles held in the alternative subtitle holding unit do not include two or more same subtitle statements.
(15) In Embodiments 1 and 2 described above, the multiplexer 102 passes the EIT packets to the subtitle management unit 108, and the subtitle management unit 108 decodes the EIT packets and extracts the program identification information and the language code. The present invention, however, is not required to have this structure.
   In order to achieve one aspect of the present invention while suppressing modification to the structure of existing reception apparatuses, for example, the reception apparatuses in Embodiments 1 and 2 described above may each include a program guide display unit (not illustrated). The program guide display unit acquires the EIT packets to display an electronic program guide (EPG), and holds, for each channel, information showing programs and times at which the programs are broadcast. The reception apparatus also holds current time information. The subtitle management unit 108 may acquire program identification information corresponding to the current time information from the program guide display unit.
   Instead of extracting the language code from the EIT packets, the subtitle management unit 108 may extract the language code from the subtitle data.
(16) In Embodiment 2 described above, information displayed by using the application program for subtitle display is not limited to the subtitles. As illustrated in FIG. 18B, program-related information may be displayed together with the subtitles in accordance with the progress of the program. Alternatively, information meeting a user's preference, and information for a particular district and news may be displayed together with the subtitles.
(17) Embodiments and Modifications described above may be combined with one another as appropriate.

### <5. Supplement>

The following describes the structures of the reception apparatus, the broadcast-communication collaboration system, and the broadcast-communication collaboration method as aspects of the present invention, as well as modifications and effects thereof.
(a) A reception apparatus includes: a broadcast reception unit configured to receive broadcast content including a video stream, broadcast subtitles, and timing information, the video stream being composed of a plurality of images output along a time axis, the broadcast subtitles being composed of character strings, the timing information being used to output the broadcast subtitles in synchronization with the images; an alternative subtitle acquisition unit configured to acquire alternative subtitles prior to reception of the broadcast content, the alternative subtitles being composed of character strings that are alternatives to the character strings constituting the broadcast subtitles in a different representation; an alternative subtitle holding unit configured to hold the alternative subtitles as acquired; and an alternative subtitle synchronization unit configured to output the alternative subtitles at a timing designated with respect to the broadcast subtitles.
   Here, the alternative subtitle synchronization unit corresponds to the timing control unit 112, the alternative subtitle screen generation unit 115, and the alternative subtitle output unit 116 in Embodiment 1 described above. The alternative subtitle synchronization unit also corresponds to the timing control unit 112, the collaboration screen output unit 1300, the communication content screen generation unit 1500, and the communication content screen output unit 1600 in Embodiment 2 described above.
   According to this structure, since the alternative subtitles are output by using the timing information used to output the broadcast subtitles, the images constituting the video stream can be output in synchronization with the character strings constituting the alternative subtitles without putting a heavy load on the reception apparatus.
   As described in Embodiments 1 and 2 above, "acquire alternative subtitles prior to reception of the broadcast content" means that, before a character string in the broadcast subtitles having the same synchronization identifier is received, a character string in the alternative subtitles corresponding to the character string in the broadcast subtitles is acquired. All the alternative subtitles used in a single program may not be acquired before broadcasting.
(b) The character strings constituting the broadcast subtitles may be associated with respective identifiers that are different from one another, the character strings constituting the alternative subtitles may each be associated with a corresponding one of the identifiers associated with the character strings constituting the broadcast subtitles, and the alternative subtitle synchronization unit may output each of the character strings constituting the alternative subtitles at a timing designated with respect to one of the character strings constituting the broadcast subtitles that is associated with the same identifier as said each of the character strings constituting the alternative subtitles.
   According to this structure, the reception apparatus can easily indentify character strings constituting the alternative subtitles corresponding to the respective character strings constituting the broadcast subtitles, and can easily acquire, from the alternative subtitles holding unit, a character string in the alternative subtitles to be output. Therefore, a delay in generation of the subtitle plane and output of the display screen can be suppressed.
(c) The reception apparatus may further include a selection unit configured to select one of a plurality of representations for displaying the character strings constituting the alternative subtitles, wherein the alternative subtitle acquisition unit may acquire, as the alternative subtitles, alternative subtitles composed of character strings in the representation selected by the selection unit, and store the alternative subtitles as acquired in the alternative subtitle holding unit.
   According to this structure, the alternative subtitles suitable for individual viewers can be output.
(d) The reception apparatus may be connectable, via a network, to an external server apparatus that holds a plurality of types of alternative subtitles, wherein the alternative subtitle acquisition unit may acquire the alternative subtitles from the server apparatus via the network.
   As described above, since the amount of data that can be transmitted by broadcasting is limited, and this makes it difficult to provide optimized subtitles for individual viewers only by broadcasting. To address this problem, the reception apparatus is provided with a function to connect to the network, and acquires the alternative subtitles from the server on the network.
   According to this structure, regardless of the amount of data that can be transmitted by broadcasting, the subtitles in a representation required by a viewer can be received and output in synchronization with video.
   It is desirable that the server on the network hold the alternative subtitles in various representations to meet the needs of individual viewers. With this structure, optimized subtitles can be provided to individual viewers.
(e) The broadcast subtitles may have a data structure conforming to the Association of Radio Industries and Businesses (ARIB) standard, the broadcast reception unit may receive subtitle data including a data unit for transmitting each of the character strings constituting the broadcast subtitles and a data unit for transmitting a corresponding one of the identifiers that is associated with said each of the character strings constituting the broadcast subtitles, and the alternative subtitle synchronization unit may read, from the alternative subtitle holding unit, one of the character strings constituting the alternative subtitles that is associated with said one of the identifiers included in the subtitle data, and output the read character string at a timing designated with respect to the character string included in the subtitle data.
   According to this structure, by newly defining the data unit for transmitting the identifier, the reception apparatus can be notified of the identifier while maintaining the data structure specified in the current ARIB standard.
(f) The reception apparatus may further include an application program holding unit configured to hold an application program that is acquired from a server apparatus connected via a network, relates to the video stream, and runs on the reception apparatus, wherein the alternative subtitle synchronization unit may include: a communication content screen generation unit configured to generate a communication content screen upon receiving an instruction from the application program; and a collaboration screen output unit configured to output a collaboration screen that is a combination of the video stream and the communication content screen, the alternative subtitle synchronization unit may notify the application program of a timing designated with respect to each of the character strings constituting the broadcast subtitles, and each time the application program is notified of the timing by the alternative subtitle synchronization unit, the application program may instruct the communication content screen generation unit to generate the communication content screen so that the generated communication content screen includes one of the character strings constituting the alternative subtitles that is associated with said each of the character strings constituting the broadcast subtitles.
   Here, the application program holding unit corresponds to the communication content holding unit in Embodiment 2 described above.
   A broadcast-communication collaboration system that distributes, via a network, application programs for providing various services in conjunction with broadcast programs has been devised. The above-mentioned reception apparatus has the structure suitable for such a broadcast-communication collaboration system, and can output the images constituting the video stream in synchronization with the character strings constituting the alternative subtitles by executing the application program downloaded from the server.
(g) The character strings constituting the broadcast subtitles may be associated with respective identifiers that are different from one another, the character strings constituting the alternative subtitles may be each associated with a corresponding one of the identifiers associated with the character strings constituting the broadcast subtitles, and each time the application program is notified of the timing by the alternative subtitle synchronization unit, the application program may extract, from the alternative subtitle holding unit, said one of the character strings constituting the alternative subtitles that is associated with said each of the character strings constituting the broadcast subtitles, and pass the extracted character string to the communication content screen generation unit.
   According to this structure, the reception apparatus can easily identify the character strings constituting the alternative subtitles corresponding to the respective character strings constituting the broadcast subtitles, and acquire, from the alternative subtitle holding unit, a character string in the alternative subtitles to be output. Therefore, a delay in generation of the communication content screen and output of the collaboration screen can be suppressed.
(h) The communication content screen generation unit may generate the communication content screen so that the generated communication content screen includes selection objects for selecting one of a plurality of representations, the collaboration screen output unit may output the communication content screen including the selection objects, and upon receiving selection of one of the representations for displaying the character strings constituting the alternative subtitles, the application program may acquire alternative subtitles in the selected representation, and store the alternative subtitles as acquired in the alternative subtitle holding unit.
   According to this structure, the alternative subtitles suitable for individual viewers can be output.
(i) The character strings constituting the alternative subtitles are each a corresponding one of the character strings constituting the broadcast subtitles translated into a different language.
   According to this structure, subtitles in a language not provided by broadcasting can be output in synchronization with video.
   As described above, since the amount of data that can be transmitted by broadcasting is limited, subtitles in all languages cannot be provided by broadcasting. When the alternative subtitles acquisition unit acquires the alternative subtitles in languages desired by viewers, subtitles in languages suitable for individual viewers can be displayed.
(j) The character strings constituting the alternative subtitles are each a corresponding one of the character strings constituting the broadcast subtitles represented in a different display form.
   The display form herein is specifically a style and a font of characters. According to this structure, subtitles represented in a different display form from that of the broadcast subtitles can be output in synchronization with video according to a viewer's preference.
(k) A broadcast-communication collaboration system includes a broadcasting apparatus that broadcasts broadcast content, a server apparatus that distributes communication content, and a reception apparatus that displays the broadcast content and the communication content in conjunction with each other, wherein the broadcasting apparatus broadcasts, as the broadcast content, broadcast content including a video stream, broadcast subtitles, and timing information, the video stream being composed of a plurality of images output along a time axis, the broadcast subtitles being composed of character strings, the timing information being used to output the broadcast subtitles in synchronization with the images, the server apparatus distributes alternative subtitles as the communication content, the alternative subtitles being composed of character strings that are alternatives to the character strings constituting the broadcast subtitles in a different representation, and the reception apparatus includes: a broadcast reception unit configured to receive the broadcast content; an alternative subtitle acquisition unit configured to acquire the alternative subtitles prior to reception of the broadcast content; an alternative subtitle holding unit configured to hold the alternative subtitles as acquired; and an alternative subtitle synchronization unit configured to output the alternative subtitles at a timing designated with respect to the broadcast subtitles.
   According to the structure described above, since the alternative subtitles are output by using the timing information used to output the broadcast subtitles, the images constituting the video stream can be output in synchronization with the character strings constituting the alternative subtitles without putting a heavy load on the reception apparatus.
   According to this structure, the reception apparatus can receive subtitles in a representation not provided by broadcasting from the server apparatus, and output the received subtitles in synchronization with video.
(l) A broadcast-communication collaboration method for use in a reception apparatus that displays broadcast content and communication content in conjunction with each other, the method includes: receiving broadcast content including a video stream, broadcast subtitles, and timing information, the video stream being composed of a plurality of images output along a time axis, the broadcast subtitles being composed of character strings, the timing information being used to output the broadcast subtitles in synchronization with the images; acquiring alternative subtitles prior to reception of the broadcast content, the alternative subtitles being composed of character strings that are alternatives to the character strings constituting the broadcast subtitles in a different representation; recording the alternative subtitles as acquired in a storage area of the reception apparatus; and outputting the alternative subtitles at a timing designated with respect to the broadcast subtitles.
   According to this method, the reception apparatus can acquire subtitles in a representation not provided by broadcasting, and output the acquired subtitles in synchronization with video.

### [Industrial Applicability]

The present invention is applicable as technology for displaying digital broadcasting and communication content in synchronization with each other, in industries of providing various services by using an application program running in conjunction with digital broadcasting and in industries of manufacturing and selling reception apparatuses enjoying various services by receiving digital broadcasting and application programs.

### [Reference Signs List]

- 1, 2: broadcast-communication collaboration system
- 10, 100: digital television
- 11, 1100: reception apparatus
- 12: display
- 13: speaker
- 20: broadcasting apparatus
- 30: subtitle server
- 300: content distribution server
- 101: broadcast reception unit
- 102: demultiplexer
- 103: audio decoder
- 104: video decoder
- 105: audio output unit
- 106: video output unit
- 107: selected language storage unit
- 108: subtitle management unit
- 109: broadcast-communication collaboration control unit
- 110: alternative subtitle acquisition unit
- 111: alternative subtitle holding unit
- 112: timing control unit
- 113: broadcast subtitle screen generation unit
- 114: broadcast subtitle output unit
- 115: alternative subtitle screen generation unit
- 116: alternative subtitle output unit
- 117: synthesis unit
- 1200: communication content holding unit
- 1300: collaboration screen output unit
- 1400: application program execution unit
- 1500: communication content screen generation unit
- 1600: communication content screen output unit
- 1001: selected language reception unit
- 1002: alternative subtitle acquisition unit
- 1003: screen generation instruction unit

## Claims

1. A reception apparatus (11, 1100) comprising:
a broadcast reception unit (101) configured to receive broadcast content including a video stream, broadcast subtitles, and a plurality of pieces of timing information, the video stream being composed of a plurality of images output along a time axis, the broadcast subtitles being composed of a plurality of character strings, the character strings one-to-one corresponding to the images;
an alternative subtitle acquisition unit (110, 1002) configured to acquire alternative subtitles prior to reception of the broadcast content;
an alternative subtitle holding unit (111) configured to hold the alternative subtitles as acquired;
the pieces of timing information one-to-one correspond to the images and the character strings constituting the broadcast subtitles, and each indicate a timing at which a corresponding one of the character strings constituting the broadcast subtitles is to be output in synchronization with a corresponding one of the images
the alternative subtitles acquired by the alternative subtitle acquisition unit (110, 1002) are composed of a plurality of character strings that are alternatives to the character strings constituting the broadcast subtitles in a different representation, and
an alternative subtitle synchronization unit,
**characterized by**
the character strings constituting the broadcast subtitles are associated with respective identifiers that are different from one another, the identifiers each uniquely identifying an associated character string,
the character strings constituting the alternative subtitles one-to-one correspond to the character strings constituting the broadcast subtitles, and are each associated with one of the identifiers that is associated with a corresponding one of the character strings constituting the broadcast subtitles, and
the alternative subtitle synchronization unit outputs, at a timing indicated by one of the pieces of timing information corresponding to each of the character strings constituting the broadcast subtitles, instead of said each of the character strings constituting the broadcast subtitles, one of the character strings constituting the alternative subtitles that is associated with one of the identifiers associated with said each of the character strings constituting the broadcast subtitles.

2. The reception apparatus of claim 1, wherein
the broadcast subtitles have a data structure conforming to the Association of Radio Industries and Businesses (ARIB) standard,
the broadcast reception unit (101) receives subtitle data including a data unit for transmitting each of the character strings constituting the broadcast subtitles and a data unit for transmitting one of the identifiers that is associated with said each of the character strings constituting the broadcast subtitles, and
the alternative subtitle synchronization unit reads, from the alternative subtitle holding unit (111), one of the character strings constituting the alternative subtitles that is associated with said one of the identifiers included in the subtitle data, and outputs the read character string at a timing indicated by one of the pieces of timing information corresponding to the character string included in the subtitle data.

3. The reception apparatus of claim 1, wherein
an application program holding unit configured to hold an application program that is acquired from a server apparatus connected via a network, relates to the video stream, and runs on the reception apparatus (11, 1100), wherein
the alternative subtitle synchronization unit includes:
a communication content screen generation unit (1500) configured to generate a communication content screen upon receiving an instruction from the application program; and
a collaboration screen output unit (1300) configured to output a collaboration screen that is a combination of the video stream and the communication content screen,
the alternative subtitle synchronization unit notifies the application program of a timing indicated by one of the pieces of timing information corresponding to each of the character strings constituting the broadcast subtitle,
each time the application program is notified of the timing by the alternative subtitle synchronization unit, the application program extracts, from the alternative subtitle holding unit (111), one of the character strings constituting the alternative subtitles that is associated with one of the identifiers that is associated with each of the character strings constituting the broadcast subtitles, and passes the extracted character string to the communication content screen generation unit (1500), and
the application program instructs the communication content screen generation unit (1500) to generate the communication content screen so that the generated communication content screen includes one of the character strings constituting the alternative subtitles that is associated with said each of the character strings constituting the broadcast subtitles.

4. A broadcast-communication collaboration system (1,2) including a broadcasting apparatus (20) that broadcasts broadcast content, a server apparatus that distributes communication content, and a reception apparatus (11, 1100) that displays the broadcast content and the communication content in conjunction with each other, wherein
the broadcasting apparatus (20) broadcasts, as the broadcast content, broadcast content including a video stream, broadcast subtitles, and a plurality of pieces of timing information, the video stream being composed of a plurality of images output along a time axis, the broadcast subtitles being composed of a plurality of character strings, the character strings one-to-one corresponding to the images,
the server apparatus (30) distributes alternative subtitles as the communication content, and
the reception apparatus (11, 1100) includes:
a broadcast reception unit (101) configured to receive the broadcast content;
an alternative subtitle acquisition unit (110, 1002) configured to acquire the alternative subtitles prior to reception of the broadcast content;
the reception apparatus (11, 1100) includes an alternative subtitle holding unit (111) configured to hold the alternative subtitles as acquired;
the pieces of timing information one-to-one correspond to the images and the character strings constituting the broadcast subtitles, and each indicate a timing at which a corresponding one of the character strings constituting the broadcast subtitles is to be output in synchronization with a corresponding one of the images,
the alternative subtitles acquired by the alternative subtitle acquisition unit (110, 1002) are composed of a plurality of character strings that are alternatives to the character strings constituting the broadcast subtitles in a different representation, and
an alternative subtitle synchronization unit,
**characterized in that**
the character strings constituting the broadcast subtitles are associated with respective identifiers that are different from one another, the identifiers each uniquely identifying an associated character string,
the character strings constituting the alternative subtitles one-to-one correspond to the character strings constituting the broadcast subtitles, and are each associated with one of the identifiers that is associated with a corresponding one of the character strings constituting the broadcast subtitles, and
the alternative subtitle synchronization unit outputs, at a timing indicated by one of the pieces of timing information corresponding to each of the character strings constituting the broadcast subtitles, instead of said each of the character strings constituting the broadcast subtitles, one of the character strings constituting the alternative subtitles that is associated with one of the identifiers associated with said each of the character strings constituting the broadcast subtitles.

5. A broadcast-communication collaboration method for use in a reception apparatus (11, 1100) that displays broadcast content and communication content in conjunction with each other, the method comprising:
receiving broadcast content including a video stream, broadcast subtitles, and a plurality of pieces of timing information, the video stream being composed of a plurality of images output along a time axis, the broadcast subtitles being composed of a plurality of character strings, the character strings one-to-one corresponding to the images;
the pieces of timing information one-to-one correspond to the images and the character strings constituting the broadcast subtitles, and each indicate a timing at which a corresponding one of the character strings constituting the broadcast subtitles is to be output in synchronization with a corresponding one of the images,
acquiring alternative subtitles prior to reception of the broadcast content;
recording the alternative subtitles as acquired in a storage area of the reception apparatus (11, 1100)
the alternative subtitles acquired are composed of a plurality of character strings that are alternatives to the character strings constituting the broadcast subtitles in a different representation,
**characterized by**
the character strings constituting the broadcast subtitles are associated with respective identifiers that are different from one another, the identifiers each uniquely identifying an associated character string,
the character strings constituting the alternative subtitles one-to-one correspond to the character strings constituting the broadcast subtitles, and are each associated with one of the identifiers that is associated with a corresponding one of the character strings constituting the broadcast subtitles, and
at a timing indicated by one of the pieces of timing information corresponding to each of the character strings constituting the broadcast subtitles, instead of said each of the character strings constituting the broadcast subtitles, one of the character strings constituting the alternative subtitles that is associated with one of the identifiers associated with said each of the character strings constituting the broadcast subtitles is output.

6. The reception apparatus of claim 1, wherein
each of the character strings constituting the broadcast subtitles and one of the identifiers associated with said each of the character strings constituting the broadcast subtitles are included in the same data unit, and
when the character strings constituting the broadcast subtitles and the identifiers are included in the respective data units, the alternative subtitle synchronization unit outputs, at a timing indicated by one of the pieces of timing information corresponding to each of the character strings constituting the broadcast subtitles, one of the character strings constituting the alternative subtitles that is associated with one of the identifiers associated with said each of the character strings constituting the broadcast subtitles, and
when the identifiers are not included in the respective data units, the alternative subtitle synchronization unit outputs said each of the character strings constituting the broadcast subtitles.

7. The reception apparatus of claim 2, wherein
each of the identifiers includes a piece of program identification information and a piece of character string identification information, the piece of program identification information identifying a program, the piece of character string identification information identifying one of the character strings that is associated with said each of the identifiers in the identified program, and
the alternative subtitle acquisition unit (110, 1002) acquires the alternative subtitles from the server apparatus (30) based on the pieces of program identification information and the pieces of character string identification information included in the respective identifiers.

8. The reception apparatus of claim 1, wherein
the broadcast content received by the broadcast reception unit (101) further includes information indicating that a program included in the broadcast content is a broadcast-communication collaboration program, and
the alternative subtitle acquisition unit (110, 1002) acquires the alternative subtitles that is a broadcast-communication collaboration program prior to reception of the broadcast content.

9. The reception apparatus of claim 1, wherein
the broadcast subtitles further include a display position of the character strings constituting the broadcast subtitles, and
the reception apparatus (11, 1100) further comprises
an alternative subtitle screen generation unit (115) configured to expand the character strings constituting the alternative subtitles at the display position included in the broadcast subtitles.

10. The reception apparatus of claim 1, wherein
the alternative subtitle acquisition unit (110, 1002) acquires alternative subtitles for a program broadcast in a day or alternative subtitles for a program broadcast in several hours, depending on a storage capacity in the alternative subtitle holding unit (111).

11. The reception apparatus of claim 3, wherein
the collaboration screen includes a region where the broadcast subtitles are displayed and a region where the alternative subtitles are displayed, and
the broadcast subtitles and the alternative subtitles are displayed concurrently without turn off of display of the broadcast subtitles.

12. The reception apparatus of claim 3, wherein
the collaboration screen includes a region where the broadcast subtitles are displayed and a region where the alternative subtitles are displayed, and
the reception apparatus (11, 1100) determines whether to turn off display of the broadcast subtitles by a user's selection, and turns on or off display of the broadcast subtitles in accordance with a result of the selection.

13. The reception apparatus of claim 1, wherein
when the broadcast subtitles are in Japanese, the alternative subtitle acquisition unit (110, 1002) acquires, as the alternative subtitles, Japanese subtitles having a higher image quality than the broadcast subtitles.

14. The reception apparatus of claim 1, wherein
the alternative subtitle acquisition unit (110, 1002) acquires, as the alternative subtitles, subtitles in a style different from a style of the broadcast subtitles, and
the subtitles in the different style include subtitles in bold, subtitles in italics, subtitles as outline characters, subtitles as shadowed characters, and subtitles as 3D characters.

15. The reception apparatus of claim 2, wherein
the alternative subtitle acquisition unit (110, 1002) acquires, as the alternative subtitles, subtitles represented in a font different from a font of the broadcast subtitles from a database of the server apparatus, and
the database holds, as alternative character strings, the character strings constituting the broadcast subtitles that are represented in the different font in association with the respective identifiers.

## Patentansprüche

1. Empfangsvorrichtung (11, 1100), umfassend:
eine Rundsendeempfangseinheit (101), die dazu eingerichtet ist, Rundsendeinhalt zu empfangen, der einen Videostrom, Rundsendeuntertitel und eine Vielzahl von Zeitgabeinformationen enthält, wobei der Videostrom aus einer Vielzahl von Bildern besteht, die entlang einer Zeitachse ausgegeben werden, wobei die Rundsendeuntertitel aus einer Vielzahl von Zeichenfolgen zusammengesetzt sind, wobei die Zeichenfolgen Eins-zu-Eins den Bildern entsprechen;
eine Alternativuntertitel-Bezugseinheit (110, 1002), die zum Beziehen alternativer Untertitel vor dem Empfang des Rundsendeinhaltes eingerichtet ist;
eine Alternativuntertitel-Halteeinheit (111), die dazu eingerichtet ist, die alternativen Untertitel so zu halten, wie sie bezogen werden;
die Stücke von Zeitgabeinformationen den Bildern und den Zeichenfolgen, die die Rundsendeuntertitel bilden, eins zu eins entsprechen, und jeweils einen Zeitpunkt angeben, zu dem eine entsprechende Zeichenfolge, die die Rundsendeuntertitel bildet, synchron mit einer entsprechenden Ausgabe eines der Bilder ausgegeben werden soll,
die von der Alternativuntertitel-Bezugseinheit (110, 1002) bezogenen alternativen Untertitel aus einer Vielzahl von Zeichenfolgen bestehen, die Alternativen zu den Zeichenfolgen sind, die die Rundsendeuntertitel in einer anderen Darstellung bilden, und
eine Alternativuntertitel-Synchronisationseinheit,
**dadurch gekennzeichnet, dass**
die Zeichenfolgen, die die Rundsende-Untertitel bilden, jeweiligen Kennungen zugeordnet sind, die sich voneinander unterscheiden, wobei die Kennungen jeweils eindeutig eine zugeordnete Zeichenfolge identifizieren,
die Zeichenfolgen, die die alternativen Untertitel bilden, den Zeichenfolgen, die die Rundsendeuntertitel bilden, eins zu eins entsprechen und jeweils einem der Kennungen zugeordnet sind, die einer entsprechenden der die Rundsendeuntertitel bildenden Zeichenfolgen zugeordnet ist, und
die Alternativuntertitel-Synchronisationseinheit zu einem Zeitpunkt, der durch eines der Stücke von Zeitgabeinformationen angegeben wird, die jeder der die Rundsendeuntertitel bildenden Zeichenfolgen entsprechen, anstelle der jeweils eine die Rundsendeuntertitel bildenden Zeichenfolge eine der Zeichenfolgen ausgibt, die die alternativen Untertitel bilden, die einem der Kennungen zugeordnet sind, die mit jeder der Zeichenfolgen verbunden sind, die die Rundsendeuntertitel bilden.

2. Empfangsvorrichtung nach Anspruch 1, bei der
Rundsendeuntertitel über eine Datenstruktur verfügen, die dem Standard der Association of Radio Industries and Businesses (ARIB) entspricht,
die Rundsendeempfangseinheit (101) Untertiteldaten empfängt, die eine Dateneinheit zum Senden jeder der die Rundsendeuntertitel bildenden Zeichenfolgen und eine Dateneinheit zum Senden einer der Kennungen enthalten, die jeder der die Rundsendeuntertitel bildenden Zeichenfolgen zugeordnet ist, und
die Alternativuntertitel-Synchronisationseinheit aus der Alternativuntertitel-Halteeinheit (111) eine der Zeichenfolgen liest, die die alternativen Untertitel bilden, die der einen der in den Untertiteldaten enthaltenen Kennungen zugeordnet ist, und die gelesene Zeichenfolge zu einem Zeitpunkt ausgibt, der durch eines der Stücke der Zeitgabeinformationen gekennzeichnet ist, die der in den Untertiteldaten enthaltenen Zeichenfolge entsprechen.

3. Empfangsvorrichtung nach Anspruch 1, bei der
sich eine Anwendungsprogramm-Halteeinheit, die zum Halten eines Anwendungsprogramms eingerichtet ist, das von einer über ein Netzwerk verbundenen Servervorrichtung bezogen wird, auf den Videostrom bezieht und auf der Empfangsvorrichtung (11, 1100) abläuft, wobei
die Alternativuntertitel-Synchronisationseinheit umfasst:
eine Kommunikationsinhaltsbildschirm-Erzeugungseinheit (1500), die dazu eingerichtet ist, einen Kommunikationsinhaltsbildschirm bei Empfang einer Anweisung von dem Anwendungsprogramm zu erzeugen; und
eine Kollaborationsbildschirm-Ausgabeeinheit (1300), die zum Ausgeben eines Kollaborationsbildschirms eingerichtet ist, der eine Kombination aus dem Videostrom und dem Kommunikationsinhaltsbildschirm ist,
die Alternativuntertitel-Synchronisationseinheit das Anwendungsprogramm über eine Zeitgabe informiert, die durch ein Stück der Zeitgabeinformationen angezeigt wird, die jeder der den Rundsendeuntertitel bildenden Zeichenfolgen entsprechen,
jedesmal, wenn das Anwendungsprogramm von der alternativen Untertitel-Synchronisationseinheit über den Zeitpunkt informiert wird, das Anwendungsprogramm aus der Alternativuntertitel-Halteeinheit (111) eine der Zeichenfolgen extrahiert, die die alternativen Untertitel bilden, die einer der Kennungen zugeordnet ist, die jeder der Zeichenfolgen zugeordnet ist, die die Rundsendeuntertitel bilden, und die extrahierte Zeichenfolge an die Kommunikationsinhaltsbildschirm-Erzeugungseinheit (1500) weiterleitet, und
das Anwendungsprogramm die Kommunikationsinhaltsbildschirm-Erzeugungseinheit (1500) anweist, den Kommunikationsinhaltsbildschirm zu erzeugen, so dass der erzeugte Kommunikationsinhaltsbildschirm eine der Zeichenfolgen enthält, die die alternativen Untertitel bilden, die jeder der die Rundsendeuntertitel bildenden Zeichenfolgen zugeordnet sind.

4. Rundsendekommunikations-Kollaborationssystem (1, 2), umfassend eine Rundsendevorrichtung (20), die Rundsendeinhalte sendet, eine Servervorrichtung, die Kommunikationsinhalte verteilt, und eine Empfangsvorrichtung (11, 1100), die den Rundsendeinhalt und den Kommunikationsinhalt in Verbindung miteinander anzeigt, wobei
die Rundsendevorrichtung (20) als Rundsendeinhalt Rundsendeinhalt rundsendet, der einen Videostrom, Rundsendeuntertitel und eine Vielzahl von Stücken von Zeitgabeinformationen umfasst, wobei der Videostrom aus einer Vielzahl von Bildern besteht, die entlang einer Zeitachse ausgegeben werden, die Rundsendeuntertitel aus einer Vielzahl von Zeichenfolgen bestehen, wobei die Zeichenfolgen den Bildern eins zu eins entsprechen,
die Servervorrichtung (30) alternative Untertitel als den Kommunikationsinhalt verteilt und
die Empfangsvorrichtung (11, 1100) umfasst:
eine Rundsendeempfangseinheit (101), die zum Empfangen des Rundsendeinhaltes eingerichtet ist;
eine Alternativuntertitel-Bezugseinheit (110, 1002), die zum Beziehen der alternativen Untertitel vor dem Empfang des Rundsendeinhaltes eingerichtet ist;
die Empfangsvorrichtung (11, 1100) eine Alternativuntertitel-Halteeinheit (111) umfasst, die dazu eingerichtet ist, die alternativen Untertitel so zu halten, wie sie bezogen werden;
die Stücke von Zeitgabeinformationen den Bildern und den Zeichenfolgen, die die Rundsendeuntertitel bilden, eins zu eins entsprechen, und jeweils einen Zeitpunkt angeben, zu dem eine entsprechende Zeichenfolge, die die Rundsendeuntertitel bildet, synchron mit einer entsprechenden Ausgabe eines der Bilder ausgegeben werden soll,
die von der Alternativuntertitel-Bezugseinheit (110, 1002) bezogenen alternativen Untertitel aus einer Vielzahl von Zeichenfolgen bestehen, die Alternativen zu den Zeichenfolgen sind, die die Rundsendeuntertitel in einer anderen Darstellung bilden, und
eine Alternativuntertitel-Synchronisationseinheit,
**dadurch gekennzeichnet, dass**
die Zeichenfolgen, die die Rundsende-Untertitel bilden, jeweiligen Kennungen zugeordnet sind, die sich voneinander unterscheiden, wobei die Kennungen jeweils eindeutig eine zugeordnete Zeichenfolge identifizieren,
die Zeichenfolgen, die die alternativen Untertitel bilden, den Zeichenfolgen, die die Rundsendeuntertitel bilden, eins zu eins entsprechen und jeweils einem der Kennungen zugeordnet sind, die einer entsprechenden der die Rundsendeuntertitel bildenden Zeichenfolgen zugeordnet ist, und
die Alternativuntertitel-Synchronisationseinheit zu einem Zeitpunkt, der durch eines der Stücke von Zeitgabeinformationen angegeben wird, die jeder der die Rundsendeuntertitel bildenden Zeichenfolgen entsprechen, anstelle der jeweils eine die Rundsendeuntertitel bildenden Zeichenfolge eine der Zeichenfolgen ausgibt, die die alternativen Rundsendeuntertitel bilden, die einem der Kennungen zugeordnet sind, die jeder der Zeichenfolgen zugeordnet sind, die die Rundsendeuntertitel bilden.

5. Rundsendekommunikations-Kollaborationsverfahren zur Verwendung in einer Empfangsvorrichtung (11, 1100), die Rundsendeinhalt und Kommunikationsinhalt in Verbindung miteinander anzeigt, wobei das Verfahren umfasst:
Empfangen von Rundsendeinhalt, der einen Videostrom, Rundsendeuntertitel und eine Vielzahl von Stücken von Zeitgabeinformationen umfasst, wobei der Videostrom aus mehreren entlang einer Zeitachse ausgegebenen Bildern besteht, die Rundsendeuntertitel aus mehreren Zeichenfolgen bestehen, und die Zeichenfolgen den Bildern eins zu eins entsprechen;
die Stücke von Zeitgabeinformationen den Bildern und den Zeichenfolgen, die die Rundsendeuntertitel bilden, eins zu eins entsprechen, und jeweils einen Zeitpunkt angeben, zu dem eine entsprechende Zeichenfolge, die die Rundsendeuntertitel bildet, synchron mit einer entsprechenden Ausgabe eines der Bilder ausgegeben werden soll,
Beziehen von alternativen Untertiteln vor dem Empfang des Rundsendeinhalts;
Aufzeichnen der alternativen Untertitel, wie sie bezogen werden, in einem Speicherbereich der Empfangsvorrichtung (11, 1100),
wobei die bezogenen alternativen Untertitel aus einer Vielzahl von Zeichenfolgen bestehen, die Alternativen zu den Zeichenfolgen sind, die die Rundsendeuntertitel in einer anderen Darstellung bilden,
**dadurch gekennzeichnet, dass**
die Zeichenfolgen, die die Rundsende-Untertitel bilden, jeweiligen Kennungen zugeordnet sind, die sich voneinander unterscheiden, wobei die Kennungen jeweils eindeutig eine zugeordnete Zeichenfolge identifizieren,
die Zeichenfolgen, die die alternativen Untertitel bilden, den Zeichenfolgen, die die Rundsendeuntertitel bilden, eins zu eins entsprechen und jeweils einem der Kennungen zugeordnet sind, die einer entsprechenden der die Rundsendeuntertitel bildenden Zeichenfolgen zugeordnet ist, und
zu einem Zeitpunkt, der durch eines der Stücke der Zeitgabeinformationen angezeigt wird, die jeder der Zeichenfolgen entsprechen, die die Rundsendeuntertitel bilden, anstelle von jeder der Zeichenfolgen, die die Rundsendeuntertitel bilden, eine der Zeichenfolgen ausgegeben wird, die die alternativen Untertitel bilden, die einer der Kennungen zugeordnet sind, die jeder der die Rundsendeuntertitel bildenden Zeichenfolgen zugeordnet sind.

6. Empfangsvorrichtung nach Anspruch 1, bei der
jede der die Rundsendeuntertitel bildenden Zeichenfolgen und eine der Kennungen, die jeder der Zeichenfolgen zugeordnet sind, die die Rundsendeuntertitel bilden, in derselben Dateneinheit enthalten sind, und
wenn die die Rundsendeuntertitel bildenden Zeichenfolgen und die Kennungen in den jeweiligen Dateneinheiten enthalten sind, die Alternativuntertitel-Synchronisationseinheit zu einem Zeitpunkt, der durch ein Stück der Zeitgabeinformationen angezeigt wird, die jeder der die Rundsendeuntertitel bildenden Zeichenfolgen entsprechen, eine der Zeichenfolgen ausgibt, die die alternativen Untertitel bilden, die einer der Kennungen zugeordnet sind, die jeder der Zeichenfolgen zugeordnet sind, die die Rundsendeuntertitel bilden, und
wenn die Kennungen nicht in den jeweiligen Dateneinheiten enthalten sind, die Alternativuntertitel-Synchronisationseinheit jede der Zeichenfolgen ausgibt, die die Rundsendeuntertitel bilden.

7. Empfangsvorrichtung nach Anspruch 2, bei der
jede der Kennungen ein Stück von Programmkennungsinformationen und ein Stück von Zeichenfolgen-Kennungsinformationen umfasst, wobei das Stück von Programmkennungsinformationen ein Programm kennzeichnet, und das Stück von Zeichenfolgen-Kennungsinformationen eine der Zeichenfolgen kennzeichnen, die jeder der Kennungen in dem gekennzeichneten Programm zugeordnet ist, und
die Alternativuntertitel-Bezugseinheit (110, 1002) die alternativen Untertitel von der Servervorrichtung (30) basierend auf den Stücken von Programmkennungsinformationen und den in den jeweiligen Kennungen enthaltenen Stücken von Zeichenfolgen-Kennungsinformationen bezieht.

8. Empfangsvorrichtung nach Anspruch 1, bei der
der von der Rundsendeempfangseinheit (101) empfangene Rundsendeinhalt weiterhin Informationen umfasst, die angeben, dass ein in dem Rundsendeinhalt enthaltenes Programm ein Rundsendekommunikations-Kollaborationsprogramm ist, und
die Alternativuntertitel-Bezugseinheit (110, 1002) die alternativen Untertitel, die ein Rundfunkkommunikations-Kollaborationsprogramm sind, vor dem Empfang des Rundsendeinhaltes bezieht.

9. Empfangsvorrichtung nach Anspruch 1, bei der
die Rundsendeuntertitel weiterhin eine Anzeigeposition der Zeichenfolgen umfassen, die die Rundsendeuntertitel bilden, und
die Empfangsvorrichtung (11, 1100) weiterhin umfasst:
eine Alternativuntertitelbildschirm-Erzeugungseinheit (115), die dazu eingerichtet ist, die Zeichenfolgen zu erweitern, die die alternativen Untertitel an der in den Rundsendeuntertiteln enthaltenen Anzeigeposition bilden.

10. Empfangsvorrichtung nach Anspruch 1, bei der
die Alternativuntertitel-Bezugseinheit (110, 1002) alternative Untertitel für ein Programm, das an einem Tag gesendet wird, oder alternative Untertitel für ein Programm, das in mehreren Stunden gesendet wird, abhängig von einer Speicherkapazität in der Alternativuntertitel-Halteeinheit (111) bezieht.

11. Empfangsvorrichtung nach Anspruch 3, bei der
der Kollaborationsbildschirm einen Bereich, in dem die Rundsendeuntertitel angezeigt werden, und einen Bereich umfasst, in dem die alternativen Untertitel angezeigt werden, und
die Rundsendeuntertitel sowie die alternativen Untertitel gleichzeitig angezeigt werden, ohne dass die Rundsendeuntertitel angezeigt werden.

12. Empfangsvorrichtung nach Anspruch 3, bei der
der Kollaborationsbildschirm einen Bereich, in dem die Rundsendeuntertitel angezeigt werden, und einen Bereich umfasst, in dem die alternativen Untertitel angezeigt werden, und
die Empfangsvorrichtung (11, 1100) bestimmt, ob die Anzeige der Rundsendeuntertitel durch die Auswahl eines Benutzers ausgeschaltet werden soll, und die Anzeige der Rundsendeuntertitel entsprechend einem Ergebnis der Auswahl ein- oder ausschaltet.

13. Empfangsvorrichtung nach Anspruch 1, bei der
wenn die Rundsendeuntertitel japanisch sind, die Alternativuntertitel-Bezugseinheit (110, 1002) als alternative Untertitel japanische Untertitel mit einer höheren Bildqualität als die Rundsendeuntertitel bezieht.

14. Empfangsvorrichtung nach Anspruch 1, bei der
die Alternativuntertitel-Bezugseinheit (110, 1002) als alternative Untertitel Untertitel in einem Stil erfasst, der sich von einem Stil der Rundsende-Untertitel unterscheidet, und
zu den Untertiteln in den verschiedenen Stilen fettgedruckte Untertitel, kursive Untertitel, Untertitel als Umrisszeichen, Untertitel mit Schattenwurf und Untertitel als 3D-Zeichen gehören.

15. Empfangsvorrichtung nach Anspruch 2, bei der
die Alternativuntertitel-Bezugseinheit (110, 1002) als alternative Untertitel Untertitel, die in einer Schriftart dargestellt sind, die sich von einer Schriftart der Rundsende-Untertitel unterscheidet, aus einer Datenbank der Servervorrichtung bezieht, und
die Datenbank als alternative Zeichenfolgen die Zeichenfolgen umfasst, die die Rundsende-Untertitel bilden, die in den verschiedenen Schriftarten in Verbindung mit den jeweiligen Kennungen dargestellt werden.

## Revendications

1. Appareil de réception (11, 1100) comprenant :
une unité de réception de diffusion (101) configurée pour recevoir un contenu de diffusion comprenant un flux vidéo, des sous-titres de diffusion et une pluralité d'éléments d'information temporelle, le flux vidéo étant composé d'une pluralité d'images sorties le long d'un axe temporel, les sous-titres de diffusion étant composés d'une pluralité de chaînes de caractères, les chaînes de caractères correspondant de manière biunivoque aux images ;
une unité d'acquisition de sous-titres alternatifs (110, 1002) configurée pour acquérir des sous-titres alternatifs avant la réception du contenu de diffusion ;
une unité de rétention de sous-titres alternatifs (111) configurée pour retenir les sous-titres alternatifs lorsqu'ils sont acquis ; dans lequel
les éléments d'information temporelle correspondent de manière biunivoque aux images et aux chaînes de caractères constituant les sous-titres de diffusion, et indiquent chacun un moment où une chaîne correspondante des chaînes de caractères constituant les sous-titres de diffusion doit être sortie en synchronisation avec une image correspondante desdites images,
les sous-titres alternatifs acquis par l'unité d'acquisition de sous-titres alternatifs (110, 1002) sont composés d'une pluralité de chaînes de caractères qui sont des alternatives aux chaînes de caractères constituant les sous-titres de diffusion dans une représentation différente, et
une unité de synchronisation de sous-titres alternatifs,
**caractérisé en ce que**
les chaînes de caractères constituant les sous-titres de diffusion sont associées à des identifiants respectifs qui sont différents les uns des autres, les identifiants identifiant chacun de manière unique une chaîne de caractères associée,
les chaînes de caractères constituant les sous-titres alternatifs correspondent de manière biunivoque aux chaînes de caractères constituant les sous-titres de diffusion, et sont associées chacune à l'un des identifiants qui est associé à une chaîne correspondante des chaînes de caractères constituant les sous-titres de diffusion, et
l'unité de synchronisation de sous-titres alternatifs sort, au moment indiqué par l'un des éléments d'information temporelle correspondant à chacune des chaînes de caractères constituant les sous-titres de diffusion, au lieu desdites chacune des chaînes de caractères constituant les sous-titres de diffusion, une des chaînes de caractères constituant les sous-titres alternatifs qui est associée à l'un des identifiants associés auxdites chacune des chaînes de caractères constituant les sous-titres de diffusion.

2. Appareil de réception selon la revendication 1, dans lequel
les sous-titres de diffusion ont une structure de données conforme à la norme de l'association des industries et entreprises de la radio ARIB (Association of Radio Industries and Businesses),
l'unité de réception de diffusion (101) reçoit des données de sous-titrage comprenant une unité de données pour transmettre chacune des chaînes de caractères constituant les sous-titres de diffusion et une unité de données pour transmettre un des identifiants qui est associé auxdites chacune des chaînes de caractères constituant les sous-titres de diffusion, et
l'unité de synchronisation des sous-titres alternatifs lit, à partir de l'unité de rétention de sous-titres alternatifs (111), une des chaînes de caractères constituant les sous-titres alternatifs qui est associée auxdits un des identifiants inclus dans les données de sous-titrage, et sort la chaîne de caractères lue à un moment indiqué par l'un des éléments d'information temporelle correspondant à la chaîne de caractères incluse dans les données de sous-titrage.

3. Appareil de réception selon la revendication 1, dans lequel
une unité de rétention de programme d'application, configurée pour retenir un programme d'application acquis auprès d'un appareil serveur connecté via un réseau, a trait au flux vidéo et tourne sur l'appareil de réception (11, 1100), dans lequel
l'unité de synchronisation de sous-titres alternatifs comprend :
une unité de génération d'écran de contenu de communication (1500) configurée pour générer un écran de contenu de communication lors de la réception d'une instruction provenant du programme d'application ; et
une unité de sortie d'écran de collaboration (1300) configurée pour sortir un écran de collaboration qui est une combinaison du flux vidéo et de l'écran de contenu de communication, dans lequel
l'unité de synchronisation de sous-titres alternatifs notifie le programme d'application d'un moment indiqué par l'un des éléments d'information temporelle, correspondant à chacune des chaînes de caractères constituant le sous-titre de diffusion,
chaque fois que le programme d'application est notifié du moment par l'unité de synchronisation de sous-titre alternatif, le programme d'application extrait, dans l'unité de rétention de sous-titres alternatifs (111), l'une des chaînes de caractères constituant les sous-titres alternatifs qui est associée à l'un des identifiants associés à chacune des chaînes de caractères constituant les sous-titres de diffusion, et transfère la chaîne de caractères extraite à l'unité de génération d'écran de contenu de communication (1500), et
le programme d'application commande à l'unité de génération d'écran de contenu de communication (1500) de générer l'écran de contenu de communication de telle sorte que l'écran de contenu de communication généré comprend une des chaînes de caractères constituant les sous-titres alternatifs qui est associée auxdites chacune des chaînes de caractères constituant les sous-titres de diffusion.

4. Système de collaboration de diffusion-communication (1,2) comprenant un appareil de diffusion (20) qui diffuse un contenu de diffusion, un appareil serveur qui distribue un contenu de communication, et un appareil de réception (11, 1100) qui affiche le contenu de diffusion et le contenu de communication en conjonction entre eux, dans lequel
l'appareil de diffusion (20) diffuse, comme contenu de diffusion, un contenu de diffusion comprenant un flux vidéo, des sous-titres de diffusion et une pluralité d'éléments d'information temporelle, le flux vidéo étant composé d'une pluralité d'images sorties le long d'un axe temporel, les sous-titres de diffusion étant composés d'une pluralité de chaînes de caractères, les chaînes de caractères correspondant de manière biunivoque aux images,
l'appareil serveur (30) distribue des sous-titres alternatifs comme contenu de communication, et
l'appareil de réception (11, 1100) comprend :
une unité de réception de diffusion (101) configurée pour recevoir le contenu de diffusion ;
une unité d'acquisition de sous-titres alternatifs (110, 1002) configurée pour acquérir les sous-titres alternatifs avant la réception du contenu de diffusion ;
l'appareil de réception (11, 1100) comprend une unité de rétention de sous-titres alternatifs (111) configurée pour retenir les sous-titres alternatifs lorsqu'ils sont acquis ;
les éléments d'information temporelle correspondent de manière biunivoque aux images et aux chaînes de caractères constituant les sous-titres de diffusion, et indiquent chacun un moment où une chaîne correspondante des chaînes de caractères constituant les sous-titres de diffusion doit être sortie en synchronisation avec une image correspondante desdites images,
les sous-titres alternatifs acquis par l'unité d'acquisition de sous-titres alternatifs (110, 1002) étant composés d'une pluralité de chaînes de caractères qui sont des alternatives aux chaînes de caractères constituant les sous-titres de diffusion dans une représentation différente, et
une unité de synchronisation de sous-titres alternatifs,
**caractérisé en ce que**
les chaînes de caractères constituant les sous-titres de diffusion sont associées à des identifiants respectifs qui sont différents les uns des autres, les identifiants identifiant chacun de manière unique une chaîne de caractères associée,
les chaînes de caractères constituant les sous-titres alternatifs correspondent de manière biunivoque aux chaînes de caractères constituant les sous-titres de diffusion, et sont associées chacune à l'un des identifiants qui est associé à une chaîne correspondante des chaînes de caractères constituant les sous-titres de diffusion, et
l'unité de synchronisation de sous-titres alternatifs sort, au moment indiqué par l'un des éléments d'information temporelle correspondant à chacune des chaînes de caractères constituant les sous-titres de diffusion, au lieu desdites chacune des chaînes de caractères constituant les sous-titres de diffusion, une des chaînes de caractères constituant les sous-titres alternatifs qui est associée à l'un des identifiants associés auxdites chacune des chaînes de caractères constituant les sous-titres de diffusion.

5. Procédé de collaboration de diffusion-communication destiné à être utilisé dans un appareil de réception (11, 1100) qui affiche un contenu de diffusion et un contenu de communication en conjonction entre eux, le procédé comprenant :
la réception de contenu de diffusion comprenant un flux vidéo, des sous-titres de diffusion et une pluralité d'éléments d'information temporelle, le flux vidéo étant composé d'une pluralité d'images sorties le long d'un axe temporel, les sous-titres de diffusion étant composés d'une pluralité de chaînes de caractères, les chaînes de caractères correspondant de manière biunivoque aux images ;
dans lequel les éléments d'information temporelle correspondent de manière biunivoque aux images et aux chaînes de caractères constituant les sous-titres de diffusion, et indiquent chacun un moment où une chaîne correspondante des chaînes de caractères constituant les sous-titres de diffusion doit être sortie en synchronisation avec une image correspondante desdites images,
l'acquisition de sous-titres alternatifs avant la réception du contenu de diffusion ;
l'enregistrement des sous-titres alternatifs lorsqu'ils sont acquis dans une zone de stockage de l'appareil de réception (11, 1100),
dans lequel les sous-titres alternatifs acquis sont composés d'une pluralité de chaînes de caractères qui sont des alternatives aux chaînes de caractères constituant les sous-titres de diffusion dans une représentation différente,
**caractérisé en ce que**
les chaînes de caractères constituant les sous-titres de diffusion sont associées à des identifiants respectifs qui sont différents les uns des autres, les identifiants identifiant chacun de manière unique une chaîne de caractères associée,
les chaînes de caractères constituant les sous-titres alternatifs correspondent de manière biunivoque aux chaînes de caractères constituant les sous-titres de diffusion, et sont associées chacune à l'un des identifiants qui est associé à une chaîne correspondante des chaînes de caractères constituant les sous-titres de diffusion, et
au moment indiqué par l'un des éléments d'information temporelle correspondant à chacune des chaînes de caractères constituant les sous-titres de diffusion, au lieu desdites chacune des chaînes de caractères constituant les sous-titres de diffusion, une des chaînes de caractères constituant les sous-titres alternatifs qui est associée à l'un des identifiants associés auxdites chacune des chaînes de caractères constituant les sous-titres de diffusion est sortie.

6. Appareil de réception selon la revendication 1, dans lequel
chacune des chaînes de caractères constituant les sous-titres de diffusion et l'un des identifiants associés auxdites chacune des chaînes de caractères constituant les sous-titres de diffusion sont inclus dans la même unité de données, et
quand les chaînes de caractères constituant les sous-titres de diffusion et les identifiants sont inclus dans les unités de données respectives, l'unité de synchronisation de sous-titres alternatifs sort, au moment indiqué par l'un des éléments d'information temporelle correspondant à chacune des chaînes de caractères constituant les sous-titres de diffusion, l'une des chaînes de caractères constituant les sous-titres alternatifs qui est associée à l'un des identifiants associés auxdites chacune des chaînes de caractères constituant les sous-titres de diffusion, et
quand les identifiants ne sont pas inclus dans les unités de données respectives, l'unité de synchronisation des sous-titres alternatifs sort lesdites chacune des chaînes de caractères constituant les sous-titres de diffusion.

7. Appareil de réception selon la revendication 2, dans lequel
chacun des identifiants comprend un élément d'information d'identification de programme et un élément d'information d'identification de chaîne de caractères, l'élément d'information d'identification de programme identifiant un programme, l'élément d'information d'identification de chaîne de caractères identifiant l'une des chaînes de caractères qui est associée auxdits chacun des identifiants dans le programme identifié, et
l'unité d'acquisition de sous-titres alternatifs (110, 1002) acquiert les sous-titres alternatifs auprès de l'appareil serveur (30) sur base des éléments d'information d'identification de programme et des éléments d'information d'identification de chaîne de caractères inclus dans les identifiants respectifs.

8. Appareil de réception selon la revendication 1, dans lequel
le contenu de diffusion reçu par l'unité de réception de diffusion (101) comprend en outre de l'information indiquant qu'un programme inclus dans le contenu de diffusion est un programme de collaboration de diffusion-communication, et
l'unité d'acquisition de sous-titres alternatifs (110, 1002) acquiert les sous-titres alternatifs qui correspondent à un programme de collaboration de diffusion-communication avant la réception du contenu de diffusion.

9. Appareil de réception selon la revendication 1, dans lequel
les sous-titres de diffusion comprennent en outre une position d'affichage des chaînes de caractères constituant les sous-titres de diffusion, et
l'appareil de réception (11, 1100) comprend en outre une unité de génération d'écran de sous-titres alternatifs (115) configurée pour étendre les chaînes de caractères qui constituent les sous-titres alternatifs à la position d'affichage incluse dans les sous-titres de diffusion.

10. Appareil de réception selon la revendication 1, dans lequel
l'unité d'acquisition de sous-titres alternatifs (110, 1002) acquiert des sous-titres alternatifs pour un programme diffusé en un jour ou des sous-titres alternatifs pour un programme diffusé en plusieurs heures, en fonction de la capacité de stockage dans l'unité de rétention de sous-titres alternatifs (111).

11. Appareil de réception selon la revendication 3, dans lequel
l'écran de collaboration comprend une région où les sous-titres de diffusion sont affichés et une région où les sous-titres alternatifs sont affichés, et
les sous-titres de diffusion et les sous-titres alternatifs sont affichés simultanément sans éteindre l'affichage des sous-titres de diffusion.

12. Appareil de réception selon la revendication 3, dans lequel
l'écran de collaboration comprend une région où les sous-titres de diffusion sont affichés et une région où les sous-titres alternatifs sont affichés, et
l'appareil de réception (11, 1100) détermine s'il faut ou non éteindre l'affichage des sous-titres de diffusion par une sélection de l'utilisateur, et allume ou éteint l'affichage des sous-titres de diffusion conformément à un résultat de la sélection.

13. Appareil de réception selon la revendication 1 dans lequel,
quand les sous-titres de diffusion sont en japonais, l'unité d'acquisition de sous-titres alternatifs (110, 1002) acquiert, comme sous-titres alternatifs, des sous-titres en japonais ayant une meilleure qualité d'image que les sous-titres de diffusion.

14. Appareil de réception selon la revendication 1, dans lequel
l'unité d'acquisition de sous-titres alternatifs (110, 1002) acquiert, comme sous-titres alternatifs, des sous-titres d'un style différent du style des sous-titres de diffusion, et
les sous-titres du style différent comprennent des sous-titres en gras, des sous-titres en italique, des sous-titres en caractères soulignés, des sous-titres en caractères ombrés et des sous-titres en caractères tridimensionnels.

15. Appareil de réception selon la revendication 2, dans lequel
l'unité d'acquisition de sous-titres alternatifs (110, 1002) acquiert, comme sous-titres alternatifs, des sous-titres représentés dans une fonte différente d'une fonte des sous-titres de diffusion provenant d'une base de données de l'appareil serveur, et
la base de données retient, comme chaînes de caractères alternatives, les chaînes de caractères constituant les sous-titres de diffusion qui sont représentés dans la fonte différente en association avec les identifiants respectifs.
